(19) Europäisches Patentamt

European Patent Office

Office européen des brevets

(11) **EP 0 735 346 B1**

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(51) Int Cl.[7]: **G01D 5/38**

(21) Anmeldenummer: **96101181.4**

(22) Anmeldetag: **29.01.1996**

(54) **Lichtelektrische Positionsmesseinrichtung**

Opto-electrical position-measuring device

Dispositif opto-électrique de mesure de positions

(84) Benannte Vertragsstaaten:
**AT CH DE FR GB IT LI**

(30) Priorität: **25.03.1995 DE 19511068**

(43) Veröffentlichungstag der Anmeldung:
**02.10.1996 Patentblatt 1996/40**

(73) Patentinhaber: **Dr. Johannes Heidenhain GmbH**
**83292 Traunreut (DE)**

(72) Erfinder: **Holzapfel, Wolfgang, Dr.**
**D-83119 Obing (DE)**

(56) Entgegenhaltungen:
**EP-A- 0 359 414      EP-A- 0 482 224**
**EP-A- 0 498 904      EP-A- 0 513 427**
**EP-A- 0 547 270      US-A- 5 214 280**

**Beschreibung**

Die Erfindung betrifft eine lichtelektrische Positionsmeßeinrichtung, bei der Licht einer Lichtquelle von mehreren zueinander verschiebbaren Gittern positionsabhängig moduliert wird, indem an den Gittern gebeugte Lichtstrahlenbündel miteinander interferieren und mehrere Fotodetektoren zur Bildung zueinander phasenversetzter elektrischer Signale vorgesehen sind.

Eine derartige Positionsmeßeinrichtung ist in der EP-0 163 362-B1 beschrieben. Ein reflektierendes Maßstabgitter ist relativ zu einem Abtastgitter verschiebbar. Das Abtastgitter ist ein Phasengitter mit einem bestimmten Verhältnis der Stegbreiten zu den Furchenbreiten, um drei elektrische Signale zu erzeugen, die um 120° gegeneinander phasenverschoben sind. Auf jeden der drei Detektoren wird eine Gruppe von Beugungsstrahlen gleicher Richtung fokussiert. Bei diesen Gruppen von Beugungsstrahlen gleicher Richtung spricht man auch von sogenannten resultierenden Beugungsordnungen. Die Beugungsstrahlen n-ter resultierender Beugungsordnung ist die Gruppe der Strahlen, die aus dem Gesamtsystem der beiden Gitter richtungsmäßig so austreten, als wären sie abgesehen von der Reflexion am Maßstab nur von einem der Gitter in n-ter Beugungsordnung abgelenkt worden.

Aus der DE-34 16 864-C2 ist eine weitere derartige Positionsmeßeinrichtung bekannt. Der Bereich einer Referenzmarke eines Maßstabes besteht aus einer Transversalteilung, die mit einer Blendenstruktur (Amplitudenteilung) der Abtastplatte abgetastet wird. Diese Transversalteilung besteht aus mehreren streifenförmigen Beugungselementen, die in Meßrichtung nebeneinander angeordnet sind. Die Beugungselemente sind transversale Gitter, deren Gitterstege parallel zur Meßrichtung verlaufen. Die einzelnen Beugungselemente unterscheiden sich hinsichtlich ihrer transversalen Teilungsperioden und lenken daher ein auftreffendes Lichtbündel in unterschiedliche Richtungen ab. Wird diese Transversalteilung durch die Spalte der Abtastplatte hindurch beleuchtet, so werden abgelenkte Lichtstrahlenbündel erzeugt, deren Ablenkwinkel von der transversalen Teilungsperiode und somit vom beleuchteten transversalen Gitterbereich abhängt, woraus die Maßstabposition abgeleitet wird. Unterschiedlich abgelenkte Lichtstrahlenbündel werden durch eine Linse auf verschiedene Fotodetektoren in der Brennebene der Linse fokussiert.

Bei der Positionsmeßeinrichtung gemäß der EP-0 220 757-B1 besitzt der Maßstab ebenfalls eine Transversalteilung. Der Maßstab besteht aus in Meßrichtung hintereinander angeordneten reflektierenden Bereichen und Bereichen mit der Transversalteilung.

Diese Transversalteilung ist ein Phasengitter, dessen Gitterparameter derart gewählt sind, daß die entstehende O. Beugungsordnung ausgelöscht wird und die weiteren Beugungsordnungen nicht auf den Fotodetektor treffen. Die Bereiche mit der Transversalteilung werden somit vom Fotodetektor als nicht reflektierende Bereiche gesehen.

Desweiteren sind Kreuzgitter und Schachbrettgitter als Maßstab für zwei Meßrichtungen bekannt. Die Gitterstriche der Positionsmeßeinrichtung gemäß der EP-0 482 224-B1 verlaufen beispielsweise diagonal zu den--beiden Meßrichtungen, so daß auftreffendes Licht in zwei Richtungen gebeugt wird. Diese Gitter sind nicht zur Erzeugung von gegeneinander phasenverschobenen Abtastsignalen ausgestaltet, da die nebeneinanderliegenden transversalen Gitterbereiche eine transversale Phasenverschiebung von 0° oder von 180° aufweisen.

Der Erfindung liegt die Aufgabe zugrunde, eine lichtelektrische Positionsmeßeinrichtung zu schaffen, die einfach aufgebaut und kostengünstig herzustellen ist.

Diese Aufgabe wird mit einer Positionsmeßeinrichtung gelöst, welche die Merkmale des Anspruches 1 aufweist.

Vorteilhafte Ausgestaltungen sind in den abhängigen Ansprüchen angegeben.

Die Vorteile der erfindungsgemäßen Positionsmeßeinrichtung bestehen darin, daß durch eine (Quasi)Einfeldabtastung positionsabhängige Abtastsignale mit hohen Pegeln und Grenzfrequenzen erzeugt werden können, die unempfindlich sind gegenüber einer Verschmutzung und/oder Teilungsfehlern des Maßstabs. Weiterhin sind relativ große Fertigungstoleranzen der Phasenteilung zulässig, wodurch eine kostengünstige Fertigung möglich wird. Ein weiterer Vorteil ist, daß auf einfache Weise gegeneinander phasenverschobene Abtastsignale erzeugbar sind.

Durch einige Ausführungsbeispiele wird die Erfindung anhand der Zeichnungen näher erläutert.

Es zeigt:

Figur 1  ein Abtastgitter gemäß der Erfindung,

Figur 2  einen am Abtastgitter erzeugten Strahlengang,

Figur 3  eine Positionsmeßeinrichtung mit dem Abtastgitter gemäß der Figuren 1 und 2,

Figur 4  ein weiteres Abtastgitter,

Figur 5  ein weiteres Beispiel eines Abtastgitters,

Figur 6  ein Abtastgitter mit kontinuierlichem Verlauf,

Figur 7  ein Abtastgitter zur Filterung von Oberwellen,

Figur 8  ein Abtastgitter zur Erzeugung von vier Abtastsignalen,

| Figur 9 | eine Positionsmeßeinrichtung mit dem Abtastgitter aus Figur 8 im Schnitt, |
|---|---|
| Figur 10 | eine Positionsmeßeinrichtung mit dem Abtastgitter aus Figur 8 in räumlicher Darstellung, |
| Figur 11 | ein weiteres Abtastgitter, |
| Figur 12 | ein weiteres Beispiel eines Abtastgitters, |
| Figur 13 | ein Abtastgitter zur Erzeugung von drei um 120° gegeneinander phasenverschobenen Signalen, |
| Figur 14 | eine mögliche Anordnung der Fotodetektoren bei einer Positionsmeßeinrichtung mit dem Abtastgitter gemäß Figur 13, |
| Figur 15 | eine Positionsmeßeinrichtung mit dem Abtastgitter gemäß Figur 13, |
| Figur 16 | eine weitere Positionsmeßeinrichtung gemäß der Erfindung, |
| Figur 17 | das Abtastgitter der Positionsmeßeinrichtung nach Figur 16, |
| Figur 18 | einen Schnitt I-I des Abtastgitters nach Figur 17, |
| Figur 19 | einen Schnitt II-II des Abtastgitters nach Figur 17 und |
| Figur 20 | eine Positionsmeßeinrichtung nach dem Stand der Technik. |

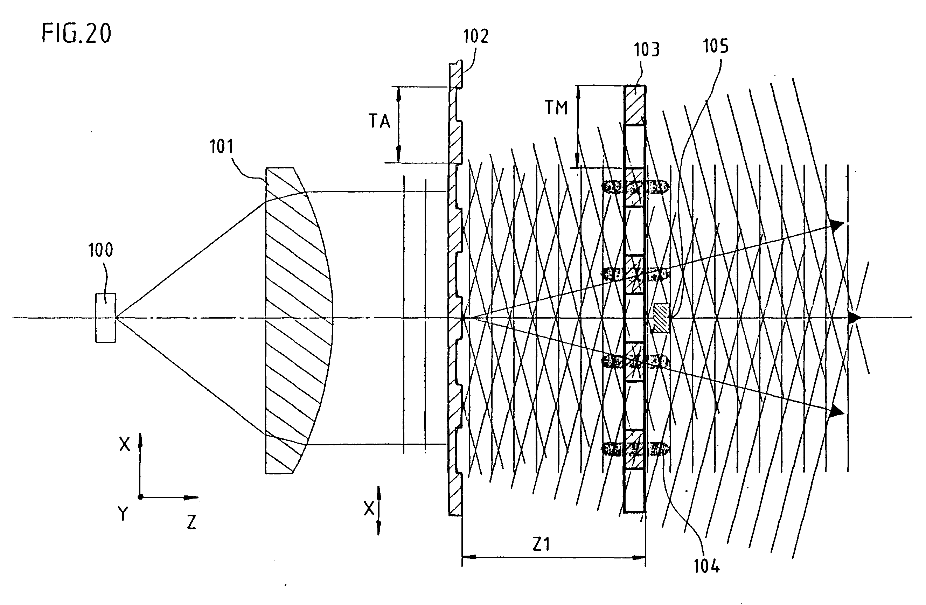

Das Funktionsprinzip der erfindungsgemäßen Positionsmeßeinrichtung wird verständlicher, wenn man zuerst das Funktionsprinzip einer bekannten Positionsmeßeinrichtung betrachtet, welches in Figur 20 gezeigt ist und kurz beschrieben werden soll. Das Licht einer Lichtquelle 100 wird durch eine Kollimatorlinse 101 kollimiert und trifft auf ein Phasengitter 102 mit einer Teilungsperiode TA. Das Phasengitter 102 besitzt etwa gleiche Steg- und Lückenbreiten und einen Phasenhub von 90°. Der Phasenhub von 90° bedeutet dabei, daß die Steghöhe unter Einbeziehung des Brechungsindex so bemessen ist, daß ein kollimiertes Strahlenbündel unmittelbar nach Durchlaufen des Phasengitters 102, also im Nahfeld eine Wellenfront besitzt, die eine lokale Phasenverschiebung 90° ($\lambda/4$) der Stegbereiche gegenüber den Lückenbereichen aufweist. Durch die Wirkung dieses Phasengitters 102 entstehen in den Abständen $Z1=(n+1/2)TA^2/\lambda$ Interferenzstreifen 104 mit der Periode TA. Mit n = 0, 1, 2 ...., $\lambda$ = Lichtwellenlänge, $TA^2/\lambda$ = Talbotabstand. In einem dieser Abstände Z1 befindet sich ein weiteres Gitter 103 mit einer Amplitudenteilung der Teilungsperiode TM=TA. Je nach Stellung der beiden Gitter 102, 103 zueinander in Meßrichtung X und somit des Gitters 103 zu den Interferenzstreifen 104 ist die transmittierte Lichtleistung unterschiedlich und wird durch einen Fotodetektor 105 erfaßt. Beim gegenseitigen Verschieben der beiden Gitter 102, 103 in Meßrichtung X liefert der Fotodetektor 105 ein periodisches Abtastsignal.

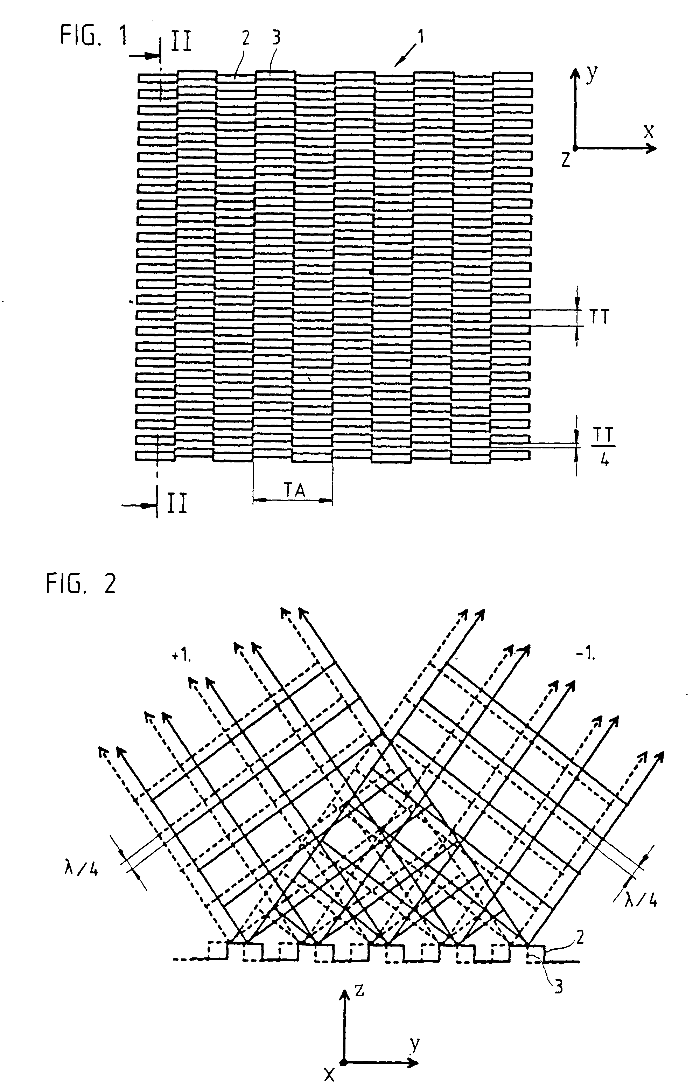

Bei der Erfindung wird nun das erste Gitter 102 als Abtastgitter 1 mit einer speziellen Transversalteilung ausgebildet, um mehrere gegeneinander phasenverschobene positionsabhängige Abtastsignale zu erzeugen. In Figur 1 ist ein derartiges Abtastgitter 1 dargestellt, das,aus einer in Meßrichtung X periodischen Aneinanderreihung von transversal strukturierten ersten und zweiten Gitterbereichen 2, 3 besteht. Diese Gitterbereiche 2, 3 sind in Meßrichtung X betrachtet zumindest etwa gleich breit. Die Breite eines ersten und eines zweiten Gitterbereiches 2, 3 bildet die Teilungsperiode TA und ist identisch mit der Teilungsperiode TM des Maßstabgitters 4. Die ersten und zweiten Gitterbereiche 2, 3 bestehen aus transversalen Gittern gleicher transversaler Teilungsperiode TT, in Y-Richtung betrachtet. Die Markierungen (Gitterstreifen) der transversalen Gitterbereiche 2, 3 sind in Y-Richtung um ein viertel der transversalen Teilungsperiode TT gegeneinander verschoben. Beide Gitterbereiche 2, 3 sind zudem als Phasengitter ausgebildet, deren Stege und Lücken derart dimensioniert sind, daß vorzugsweise die geradzahligen transversalen Beugungsordnungen (0., ±2, ±4, ...) unterdrückt werden. Hierzu haben die transversalen Steg- und Lückenelemente etwa gleiche Breite (in Y-Richtung) und die Stege besitzen eine Phasenhöhe von 180° ($\lambda/2$). Trifft nun ein kollimiertes Lichtstrahlenbündel auf dieses Abtastgitter 1, so spaltet jeder transversal strukturierter Gitterbereich 2, 3 das einfallende Lichtstrahlenbündel im wesentlichen in eine +1. und ein -1. transversale Beugungsordnung auf. Aufgrund der einheitlichen transversalen Teilungsperiode TT beider Gitterbereiche 2, 3 weisen gleiche transversale Beugungsordnungen beider Gitterbereiche 2, 3 den gleichen Ablenkwinkel (in Y-Richtung) auf. Durch den Versatz der Gitterstreifen beider Gitterbereiche 2, 3 in Y-Richtung entstehen in jeder Beugungsordnung zwei Teilstrahlenbündel, die im Nahfeld, also unmittelbar an dem Abtastgitter 1, gegeneinander phasenverschoben sind. Diese Phasenverschiebung der Teilstrahlenbündel ist in Figur 2 dargestellt.

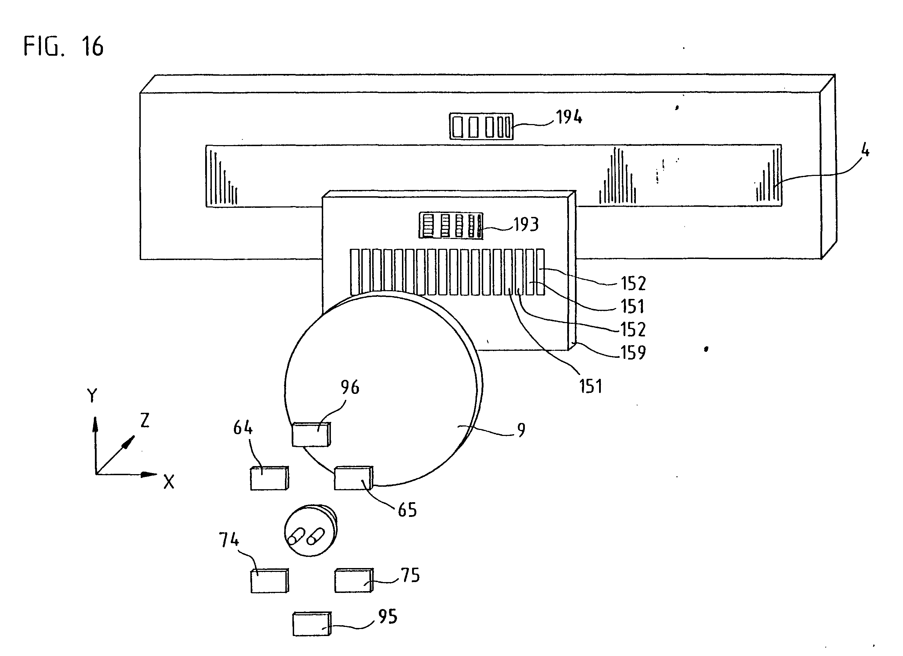

Figur 2 zeigt einen Schnitt II-II von Figur 1. Ein auf den ersten Gitterbereich 2 auftreffendes Lichtstrahlenbündel wird in +1. und -1. Beugungsordnung aufgespalten, die entstehenden Teilstrahlenbündel sind in Voll-Linien dargestellt. Ein auf den zweiten Gitterbereich 3 auftreffendes Lichtstrahlenbündel wird ebenfalls in +1. und -1. Beugungsordnung aufgespalten, die entstehenden Teilstrahlenbündel sind in unterbrochenen Linien dargestellt. In +1. transversaler Beugungsordnung beträgt die Phasenverschiebung der Teilstrahlenbündel beider Bereiche 2, 3 +90° ($\lambda$/4) und in -1. transversaler Beugungsordnung -90° (-$\lambda$/4). Diese lokalen Phasenverschiebungen sind zu vergleichen mit der lokalen Phasenverschiebung der oben beschriebenen Positionsmeßeinrichtung nach dem Stand der Technik (Figur 16). Die lokale Wirkung des erfindungsgemäßen Abtastgitters 1 ist daher ähnlich der einer herkömmlichen Phasenabtastteilung, wenn man jeweils nur eine der beiden transversalen Beugungsordnungen (+1. oder -1.) allein betrachtet und von der transversalen Ablenkung der Teilstrahlenbündel absieht. Bei einer Phasenverschiebung von +90° des Bereiches 2 gegenüber dem Bereich 3 entspricht außerdem der Bereich 2 dem Steg einer herkömmlichen Phasenabtastteilung. Bei einer Phasenverschiebung von -90° entspricht dagegen der Bereich 2 einer Lücke. Die Wirkungen der erfindungsgemäßen Teilung in +1. und -1. transversaler Beugungsordnung sind also die einer herkömmlichen Abtastteilung, jedoch um eine halbe Teilungsperiode (180°) verschoben.

Beleuchtet man nun ein derartiges Abtastgitter 1 mit kollimiertem Licht, so entstehen etwa in den bekannten Abständen $Z1=(n+1/2)TA^2/\lambda$ im wesentlichen zwei Interferenzstreifensysteme, eines ausgehend von der +1. transversalen Beugungsordnung und eines ausgehend von der -1. transversalen Beugungsordnung. Beide Interferenzstreifensysteme sind jedoch aus den oben genannten Gründen um 180° zueinander phasenverschoben, so daß die Interferenzstreifenmaximas des einen Interferenzsteifensystems mit den Minimas des anderen zusammenfallen. Befindet sich nun in einem der Abstände $Z1=(n+1/2)TA^2/\lambda$ mit n = 0, 1, 2 ... das Maßstabgitter 4 in Form einer Amplitudenteilung, so wird das transmittierte Licht der +1. und der -1. transversalen Beugungsordnung bei einer Relativverschiebung beider Gitter 1, 4 in ihrer Intensität gegenphasig moduliert.

Durch eine Linse 5 werden die +1. und -1. transversalen Beugungsordnungen auf getrennte Fotodetektoren 6, 7 geleitet, so daß diese entsprechend gegeneinander phasenverschobene Signale liefern.

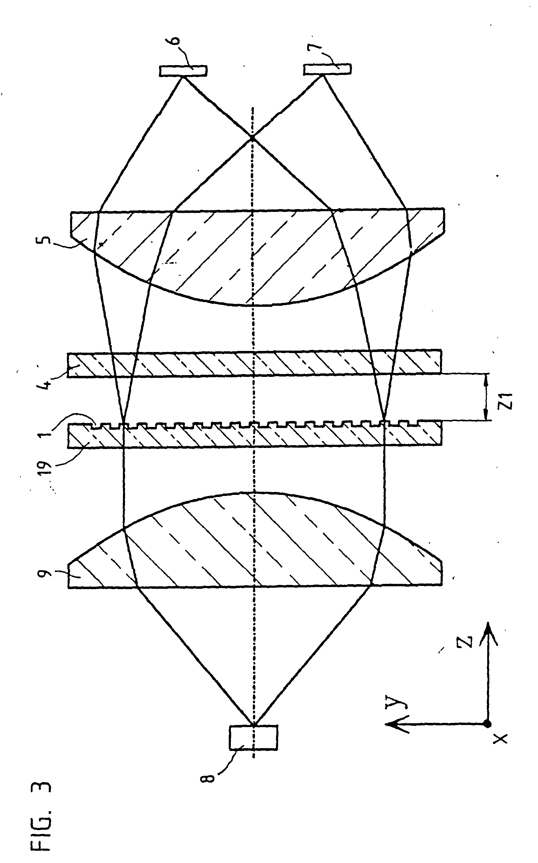

Eine Positionsmeßeinrichtung mit dem Abtastgitter 1 auf einer Abtastplatte 19 ist in Figur 3 dargestellt. Das Licht einer Lichtquelle 8, vorzugweise einer LED oder einer Halbleiterlaserdiode wird durch eine erste Linse 9 kollimiert und gelangt auf das Abtastgitter 1, welches zu den Figuren 1 und 2 ausführlich beschrieben ist. Die transmittierten Lichtstrahlenbündel fallen dann auf das Maßstabgitter 4, das sich in einem Abstand von etwa $Z1=(n+1/2)TA^2/\lambda$ mit vorzugsweise n=0 befindet. Bei einer räumlich ausgedehnten Lichtquelle 8 (LED) werden bevorzugt etwas kleinere Abstände gewählt, da durch die Divergenz der Beleuchtungseinheit, bestehend aus Lichtquelle 8 und Kollimatorlinse 9, der Kontrast der Interferenzstreifensysteme und damit der Modulationsgrad der Abtastsignale zu größeren Abtastabständen hin abfällt. Auch bei nennenswerten transversalen Ablenkwinkeln, bedingt durch kleine transversale Teilungsperioden TT, verkürzt sich der optimale Abtastabstand.

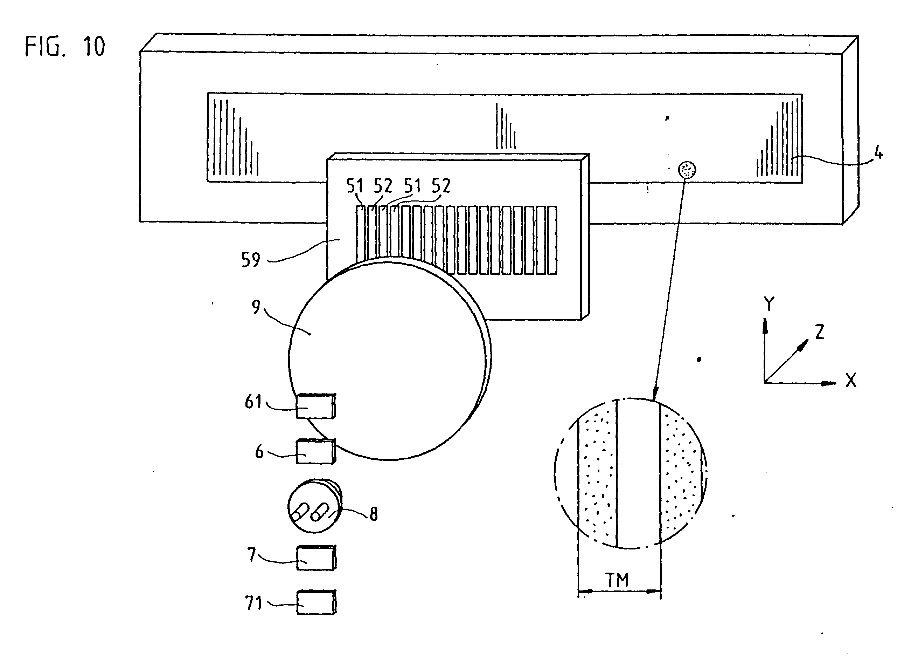

Das Maßstabgitter 4 ist ein Amplitudengitter mit in Meßrichtung X hintereinander angeordneten transparenten und nicht transparenten Streifen, die Kanten der Streifen verlaufen in Y-Richtung (ein Ausschnitt ist in Figur 10 gezeigt). Die vom Maßstabgitter 4 transmittierten Strahlenbündel werden durch eine weitere Linse 5 auf die Fotodetektoren 6, 7 fokussiert, die in Y-Richtung, also senkrecht zur Meßrichtung X, voneinander beabstandet angeordnet sind. Auf den Fotodetektor 6 treffen die +1. transversalen Beugungsordnungen der beiden Gitterbereiche 2, 3 des Abtastgitters 1 und auf den Fotodetektor 7 treffen die -1. transversalen Beugungsordnungen der beiden Gitterbereiche 2, 3 des Abtastgitters 1. Die Fotodetektoren 6, 7 liefern somit zwei um 180° gegeneinander phasenverschobene Signale. Durch die Wirkung der Linsen 5, 9 entsteht auf den Fotodetektoren 6, 7 ein Bild der Lichtquelle 8, das in der Regel sehr klein ist. Es können daher trotz großer Abtastflächen auf dem Maßstabgitter 4 sehr kleine und somit schnelle Fotodetektoren 6, 7 verwendet werden. Die beiden so erzeugten Abtastsignale werden von einem gemeinsamen Abtastbereich des Abtastgitters 1 sowie des Maßstabgitters 4 abgeleitet, so daß mit der Erfindung die Vorteile der Einfeldabtastung erreicht werden.

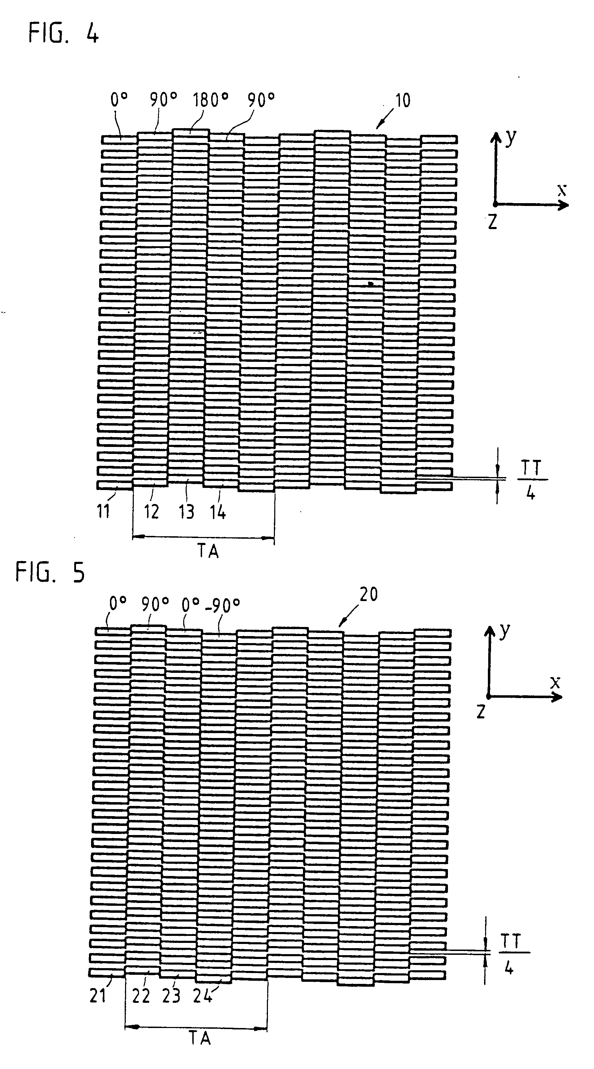

Bei dem bisher beschriebenen Beispiel weist jede Teilungsperiode TA des Abtastgitters 1 in Meßrichtung X zwei Gitterbereiche 2 und 3 auf, die transversal einen Phasenversatz aufweisen, der von 0° und 180° abweicht. Jede Teilungsperiode TA läßt sich gemäß der Erfindung aber auch in mehrere Gitterbereiche mit jeweils beliebigem Phasenversatz unterteilen. Wesentlich ist dabei, daß zur Erzeugung der gegeneinander phasenverschobenen Abtastsignale mehrere Gitterbereiche beteiligt sind, die transversal eine von 0° sowie 180° abweichende Phasenverschiebung aufweisen. In Figur 4 ist ein derartiges Abtastgitter 10 mit vier etwa gleich breiten Bereichen 11, 12, 13, 14 pro Teilungsperiode TA gezeigt. Jeder Bereich 11, 12, 13, 14 besitzt eine transversale Teilung mit in Meßrichtung X verlaufenden Markierungen (Gitterstreifen) gleicher Teilungsperiode TT. Die Gitterstreifen des zweiten Bereiches 12 sind gegenüber den Gitterstreifen des ersten Bereiches 11 um 90° phasenversetzt angeordnet, die Gitterstreifen des dritten Bereiches 13 gegenüber den Gitterstreifen des zweiten Bereiches 12 wiederum um 90° und die Gitterstreifen des vierten Bereiches 14 sind mit den Gitterstreifen des zweiten Bereiches 12 phasengleich. Es ergeben sich somit die Phasenlagen 0°, 90°, 180°, 90°.

Wird ein derartiges Abtastgitter 10 in einer Positionsmeßeinrichtung nach Figur 3 verwendet, so ist der optimale Abtastabstand etwa $Z1=(n+1/4)TA^2/\lambda$, in dem von den Fotodetektoren 6, 7 von der +1. sowie -1. transversalen Beugungsordnung zwei um 180° gegeneinander phasenverschobene Signale erzeugt werden. Dieser verringerte Abtastabstand Z1 ist besonders dann vorteilhaft, wenn durch die Divergenz der Beleuchtungseinheit 8, 9 der Modulationsgrad in einem größeren Abtastabstand Z1 zu sehr reduziert werden würde.

Für bestimmte Anwendungsfälle kann es auch vorteilhaft sein, einen größeren Abtastabstand Z1 einzuhalten, um beispielsweise durch die erhöhte Wirkung der Divergenz der Beleuchtungseinheit 8, 9 den Oberwellengehalt der Abtastsignale zu reduzieren. Dazu eignet sich ein Abtastgitter 20, wie es in Figur 5 dargestellt ist. Das Abtastgitter 20 besteht wiederum aus einem Gitter mit einer Teilungsperiode TA in Meßrichtung X, die vier transversale Gitterbereiche 21 bis 24 aufweist. Die Markierungen (Gitterstreifen) der transversalen Gitterbereiche 21 bis 24 sind derart gegeneinander phasenversetzt angeordnet, daß sich die Phasenlagen 0°, 90°, 0°, -90° ergeben. Der optimale Abtastabstand Z1 ist dabei etwa $(n+3/4)TA^2/\lambda$.

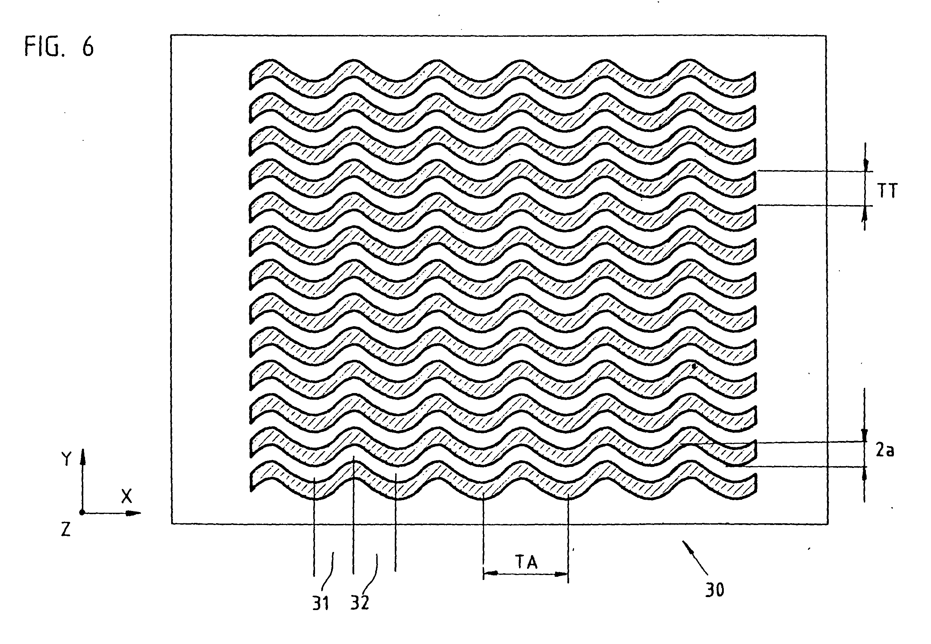

In einem weiteren Ausführungsbeispiel wird ein Abtastgitter 30 vorgeschlagen, das über eine longitudinale Teilungsperiode TA (das heißt in Meßrichtung X) hinweg einen kontinuierlichen Verlauf der Phasenverschiebung aufweist, wie in Figur 6 dargestellt ist. Durch diesen kontinuierlichen Verlauf der Markierungen beider transversaler Gitterbereiche 31 und 32 können bestimmte Eigenschaften der Positionsmeßeinrichtung optimiert werden. So läßt sich der Oberwellengehalt der Abtastsignale reduzieren oder der optimale Abtastabstand auf einen vorgegebenen Wert $Z1 = (n+C)TA^2/\lambda$ mit beliebigem C setzen. Bei dem in Figur 6 gewählten sinusförmigen Verlauf läßt sich insbesondere die dritte Oberwelle sehr stark reduzieren. Dabei ist die Amplitude a der transversalen Stegverschiebung durch folgende Bedingung gegeben:

$$a/TT = X3/(4\pi\sin(3\pi{*}Z1{*}\lambda/TA^2))$$

mit

　　　$\Delta Y = a{*}\sin(2\pi X/TA)$ lokale, transversale Stegverschiebung
　　　X3 = Nullstelle der Besselfunktion J3(X3)=0

Ein Abtastabstand $Z1 = (n+1/2)TA^2/\lambda$ ist dabei besonders vorteilhaft, da die Grundwelle einen großen Wert annimmt. Andererseits erhält man einen maximalen Modulationsgrad der Abtastsignale in einem gegebenen Abtastabstand Z1 für $a/TT = X1max/(4\pi\sin(\pi{*}Z1{*}\lambda/TA^2))$ mit dem Maximum X1max der Besselfunktion J1. Die Ausdehnung der Lichtquelle ist in diesem Fall noch zu berücksichtigen und führt zu etwas kleineren Abtastabständen Z1.

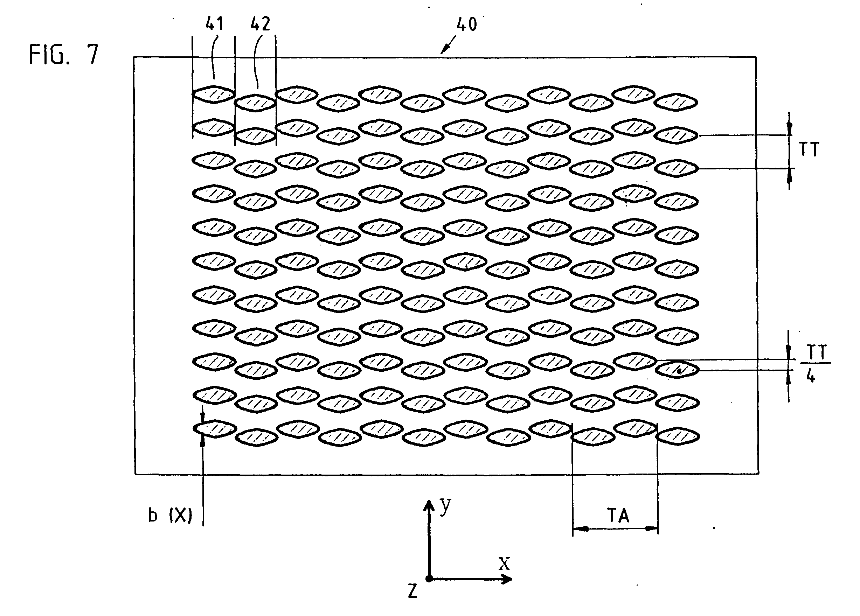

Um den Oberwellengehalt der Abtastsignale zu reduzieren ist es auch möglich, die transversalen Markierungen (Gitterstreifen) entlang der Meßrichtung X mit unterschiedlicher Breite b auszuführen, wie in Figur 7 dargestellt ist. Die Beugungseffizienz in den einzelnen Beugungsordnungen ±1, ±2, ... transversaler Beugungsordnung hängt somit vom Ort X entlang der Meßrichtung X ab. Diese transversalen Beugungsordnungen im Nahfeld betrachtet, entsprechen der Wirkung einer Kombination von herkömmlichen Phasen- und Amplitudenteilungen, da im Nahfeld sowohl die Phase als auch die Amplitude der Teilstrahlenbündel moduliert wird. Die Breite b (in Y-Richtung) der einzelnen Markierungen variiert und wenn sie beispielsweise entsprechend der Lösung der Gleichung

$$\sin(\pi b(x)/TT) = \sqrt{\sin(2\pi X/TA)}$$

gewählt wird, sind die Abtastsignale etwa bei folgendem Abstand Z1 oberwellenfrei:

$$Z1 = (n+1/2)TA^2/\lambda$$

In Figur 7 ist dieses Abtastgitter 40, bestehend aus zwei um TT/4 gegeneinander phasenverschobenen Gitterbereichen 41, 42 gezeigt, bei dem die Breite b (x) der Markierungen (Steg oder Lücke) entsprechend obiger Gleichung variiert.

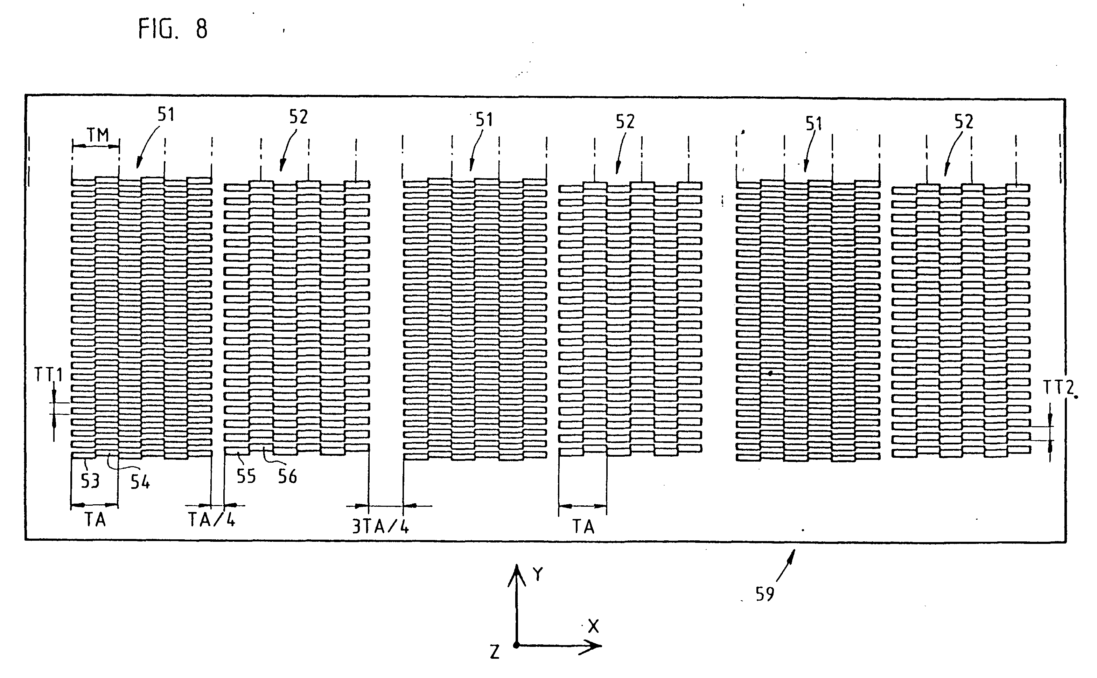

In Figur 8 ist eine Abtastplatte 59 dargestellt, die zwei Gruppen von Abtastgittern 51, 52 besitzt, die in Meßrichtung X ineinander verschachtelt angeordnet sind. Jede Gruppe besteht aus drei gleichartigen Abtastgittern 51 bzw. 52. Die Abtastgitter 51 bzw. 52 einer Gruppe sind um ein Vielfaches der longitudinalen Teilungsperiode TA versetzt angeordnet. Jedes Abtastgitter 51, 52 besteht wiederum aus drei longitudinalen Teilungsperioden TA. Die Abtastgitter 51, 52 der beiden Gruppen unterscheiden sich durch die transversalen Teilungsperioden TT1 und TT2, die beispielsweise Werte von 5µm und 7µm haben. Außerdem sind die Abtastgitter 52 der zweiten Gruppe um (m+1/4)TA gegenüber den Abtastgittern 51 der ersten Gruppe in Meßrichtung X beabstandet angeordnet, mit m = 1, 2 ... . Durch diesen geometrischen Versatz sind die Intensitätsmodulationen der ± 1. transversalen Beugungsordnung der Abtastgitter 52 der zweiten Gruppe um jeweils 90° zu denen der ersten Gruppe phasenversetzt. Durch getrennte Detektion jeweils der +1. und -1. Beugungsordnungen beider Gruppen erhält man somit vier um jeweils 90° gegeneinander phasenverschobene Abtastsignale. Selbstverständlich kann jede Gruppe aus mehr als drei Abtastgittern 51, 52 sowie jedes Abtastgitter 51, 52 aus mehr als drei Teilungsperioden TA bestehen.

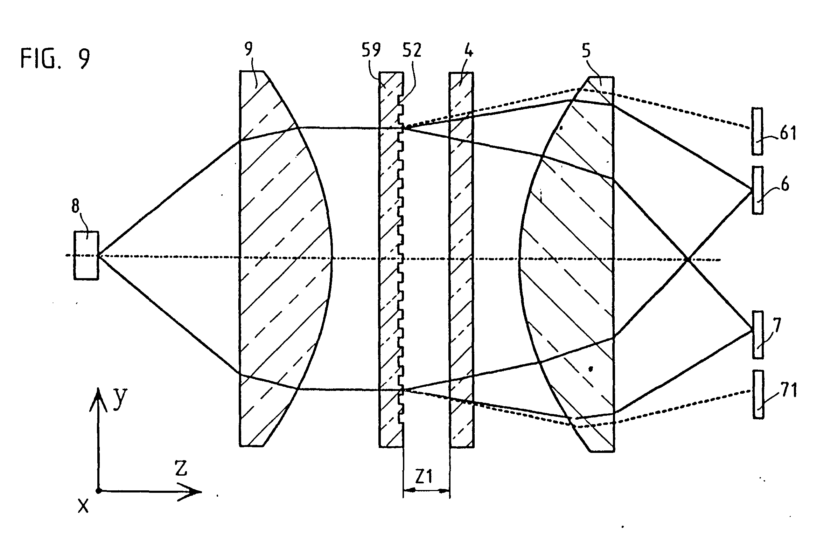

In Figur 9 ist eine Positionsmeßeinrichtung mit der Abtastplatte 59 gemäß Figur 8 dargestellt. Das Licht einer Lichtquelle 8 wird mit der Linse 9 kollimiert und gelangt auf die Abtastplatte 59. Die Teilstrahlenbündel ±1. Beugungsordnung der Abtastgitter 51, 52 beider Gruppen treffen im bekannten Abtastabstand Z1 auf das Maßstabgitter 4 und die transmittierten Teilstrahlenbündel werden von der weiteren Linse 5 auf vier Fotodetektoren 6, 7 und 61, 71 fokussiert. Die vier Fotodetektoren 6, 7, 61, 71 sind in Y-Richtung übereinander angeordnet. Durch die unterschiedlichen transversalen Teilungsperioden TT1 und TT2 werden die Lichtstrahlenbündel vom Abtastgitter 51 anders abgelenkt als vom Abtastgitter 52 und somit durch die zweite Linse 5 auf verschiedene Fotodetektoren 6, 7; 61, 71 fokussiert. Die Lichtstrahlenbündel, welche von den Abtastgittern 51 in +1. Beugungsordnung abgelenkt werden, treffen auf den Fotodetektor 61, die von dem Abtastgitter 51 in -1. Beugungsordnung abgelenkt werden, auf den Fotodetektor 71. Die Lichtstrahlenbündel, welche von den Abtastgittern 52 in +1. Beugungsordnung abgelenkt werden, treffen auf den Fotodetektor 6, die von den Abtastgittern 52 in -1. Beugungsordnung abgelenkt werden, auf den Fotodetektor 7. Jedes der Abtastgitter 51, 52 kann entsprechend der bereits beschriebenen Ausführungsformen (Figur 1 bis 7) oder Kombinationen dieser ausgebildet sein.

Die beiden beschriebenen Positionsmeßeinrichtungen arbeiten alle im Durchlichtverfahren. Die Erfindung ist aber auch beim sogenannten Auflichtverfahren realisierbar, wie in Figur 10 gezeigt. Es ergibt sich ein besonders einfacher Aufbau mit nur einer Linse 9, welche auch die Funktion der zweiten Linse 5 übernimmt. Die Abtastplatte 59 ist gemäß Figur 8 ausgebildet. Da das Maßstabgitter 4 reflektierend ausgebildet ist, wird die Abtastplatte 59 zweimal durchlaufen, so daß die beim ersten Durchgang in +1. und -1. transversaler Beugungsordnung abgelenkten Teilstrahlenbündel beim zweiten Durchgang erneut transversal in +1. und -1. Beugungsordnung abgelenkt werden und in +2. und -2. resultierender transversaler Beugungsordnung (bezogen auf die Richtung) austreten. Die vier Fotodetektoren 6, 7, 61, 71 sind in bzw. nahe der Brennebene der Linse 9 angeordnet, so daß sie diese ±2. resultierenden transversalen Beugungsordnungen der beiden Gruppen von Abtastgittern 51, 52 detektieren.

Beim ersten Durchgang durch die Abtastgitter 51, 52 werden die Teilstrahlenbündel in Y-Richtung abgelenkt und gelangen dadurch nach der Reflexion am Maßstabgitter 4 in Y-Richtung versetzt wieder auf die Abtastplatte 59. Die Feldgrenzen der einzelnen Abtastgitter 51, 52 beschneiden beim zweiten Durchgang das Teilstrahlenbündel. Diese Abschattung ist bei einem gegebenen Abtastabstand Z1 aufgrund der verschiedenen transversalen Teilungsperioden TT1, TT2 unterschiedlich für beide Abtastgitter 51, 52.

Dieser Abschattungseffekt kann durch entsprechend unterschiedliche Ausdehnungen der Abtastgitter 51, 52 in Y-Richtung kompensiert werden.

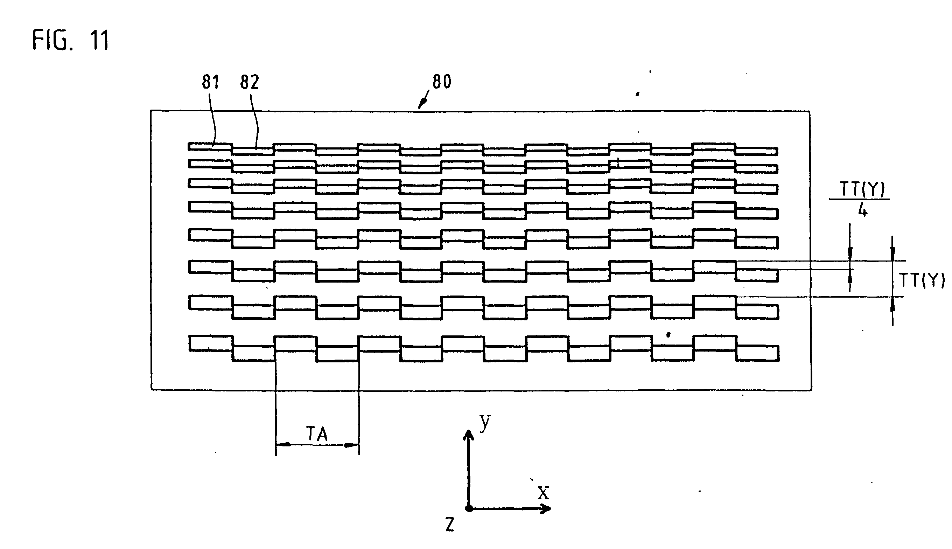

Die beim zweiten Durchgang durch die Abtastplatte 59 in ±2. resultierender transversaler Beugungsordnung austretenden Teilstrahlenbündel sind Überlagerungen verschiedener Teilstrahlenbündel, die bei den beiden Durchgängen unterschiedlich transversal abgelenkt werden. So tritt auch ein beim ersten Durchgang in +3. und beim zweiten Durchgang in -1. transversaler Beugungsordnung abgelenktes Teilstrahlenbündel in +2. resultierender transversaler Beugungsordnung aus und gelangt auf den Fotodetektor 6 bzw. 61. Da dieses Teilstrahlenbündel im Vergleich zu dem zweimal in +1. transversaler Beugungsordnung abgelenkten Teilstrahlenbündel einen unterschiedlichen Weg zurücklegt, kann bei einer kohärenten Überlagerung beider Teilstrahlenbündel ein Abtastsignal erzeugt werden, das stark vom Abtastabstand Z1 abhängt. Eine kohärente Überlagerung sollte daher vermieden werden, indem beispielsweise eine zeitlich und/oder räumlich inkohärente Lichtquelle wie z.B. eine LED oder ein longitudinal oder transversal multimodiger Laser, insbesondere eine Halbleiterlaserdiode, verwendet wird. Eine weitere Möglichkeit um eine kohärente Überlagerung zu vermeiden besteht darin, die Gitterbereiche 81, 82 eines Abtastgitters 80 als sogenanntes gechirptes Gitter auszubilden, dessen transversale Teilungsperiode TT sich in Abhängigkeit vom Weg in Y-Richtung stetig um einen kleinen Betrag ändert (Figur 11). Durch diese stetige Variation der lokalen transversalen Teilungsperiode TT(Y) werden die auftreffenden Lichtstrahlenbündel in Y-Richtung unterschiedlich abgelenkt. Diese unterschiedlich stark abgelenkten Teilstrahlenbündel werden auf einen gemeinsamen Fotodetektor 6 oder 7 gerichtet. Die Weglängenunterschiede zwischen den überlagerten Teilstrahlenbündel, welche auf einen der Fotodetektoren 6, 7 fallen, sind damit in Y-Richtung ortsabhängig und werden gemittelt, so daß die kohärente Überlagerung zerstört wird. Diese Ausbildung ist insbesondere bei der Verwendung einer Laserlichtquelle vorteilhaft.

Ein besonderer Vorteil der in Figur 10 gezeigten Positionsmeßeinrichtung ist die Lage des sogenannten neutralen Drehpunktes. Der neutrale Drehpunkt ist als der Punkt definiert, um den die Abtastanordnung 6 bis 9, 61, 71 oder der Maßstab 4 gekippt werden kann, ohne daß die Abtastsignale gegenüber ihrer Sollage phasenverschoben werden, so daß der von einer Auswerteelektronik ermittelte Positionsmeßwert konstant bleibt. Der neutrale Drehpunkt der Positionsmeßeinrichtung gemäß Figur 10 liegt in der Ebene des Maßstabgitters 4. Eine Welligkeit der Maßstaboberfläche - insbesondere in Meßrichtung X -, was einer lokalen Verkippung des Maßstabgitters 4 um eine in der Ebene des Maßstabgitters 4 liegenden Drehachse entspricht, beeinflußt damit nicht den ermittelten Positionsmeßwert, was zu erheblichen Steigerungen der Genauigkeit der Meßeinrichtung führt. Der Grund dafür ist, daß die Lichtstrahlenbündel beim zweiten Durchgang durch die Abtastplatte 59 unabhängig von der Position in X-Richtung in Y-Richtung gebeugt werden. Die Intensität der hindurchgehenden Teilstrahlenbündel ist unabhängig vom Auftreffort in Meßrichtung X. Die Fotodetektoren 6, 7, 61, 71 sollten hierzu alle longitudinalen Beugungsordnungen erfassen, zumindest alle 0. und ±1. und eventuell zusätzlich noch die ±2. Beugungsordnungen.

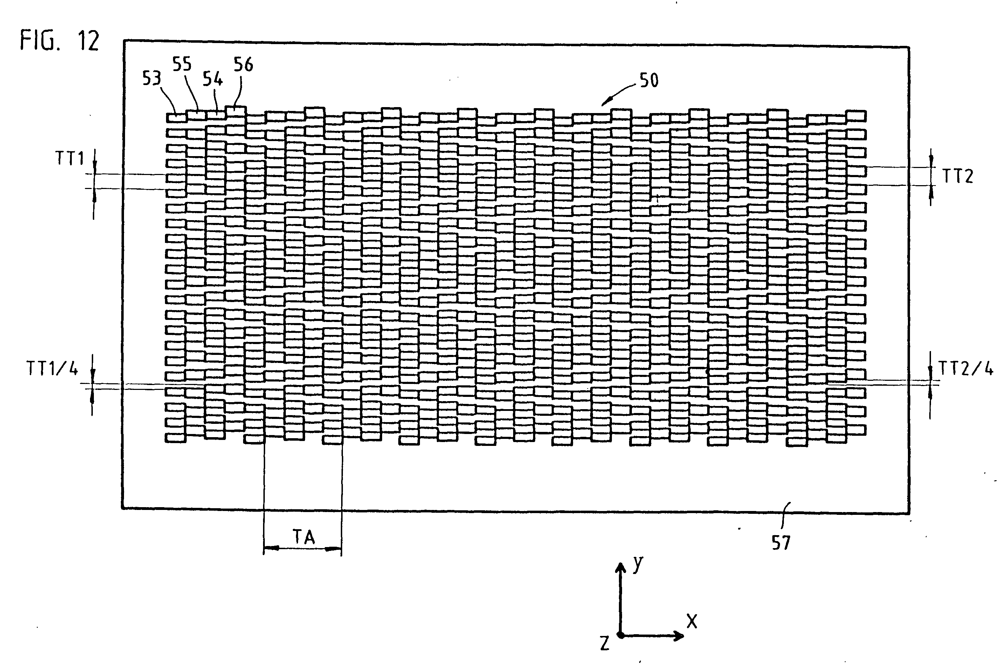

Die Abtastplatte 59 gemäß Figur 8 läßt sich so modifizieren, daß auch eine reine Einfeldabtastung ermöglicht wird. Eine derartige Abtastplatte 57 ist in Figur 12 gezeigt. Gegenüber der Figur 8 sind die um 1/4 der transversalen Teilungsperiode TT1 gegeneinander versetzten Gitterbereiche 53, 54 des Abtastgitters 51 mit der transversalen Teilungsperiode TT1 nicht direkt in Meßrichtung X nebeneinander angeordnet, sondern es ist jeweils ein Gitterbereich 55, 56 des weiteren Abtastgitters 52 mit der transversalen Teilungsperiode TT2 dazwischen angeordnet. Jede Teilungsperiode TA des so entstandenen Abtastgitters 50 besteht aus vier gleich breiten Gitterbereichen 53 bis 56. Jeweils der erste und der dritte Gitterbereich 53, 54 besitzt die gleiche transversale Teilungsperiode TT1 von z.B. 5 μm, wobei die Markierungen (Gitterstreifen) der Gitterbereiche 53, 54 um TT1/4 entsprechend 90° gegeneinander phasenverschoben sind. Sie erzeugen in den zugeordneten ersten transversalen Beugungsordnungen zwei erste um 180° gegeneinander phasenverschobene Abtastsignale. Die dazwischenliegenden zweiten und vierten Gitterbereiche 55, 56 besitzen auch eine gemeinsame, von TT1 aber verschiedene transversale Teilungsperiode TT2 von z.B. 7μm, wobei die transversalen Gitterstreifen zueinander in Y-Richtung wiederum um TT2/4 entsprechend 90° gegeneinander phasenverschoben sind. Sie erzeugen in den zugeordneten ersten transversalen Beugungsordnungen ebenfalls zwei gegeneinander um 180° phasenverschobene Abtastsignale. Diese beiden Abtastsignale sind jedoch durch den geometrischen Versatz (in Meßrichtung X) der Gitterbereiche 53, 54 gegenüber 55, 56 um 90° gegenüber den ersten beiden Abtastsignalen um 90° phasenverschoben, so daß vier gegeneinander um 90° phasenverschobene Abtastsignale 0°, 90°, 180°, 270° von einem gemeinsamen Bereich der Abtastplatte 90 und somit auch von dem Maßstabgitter 4 abgeleitet werden.

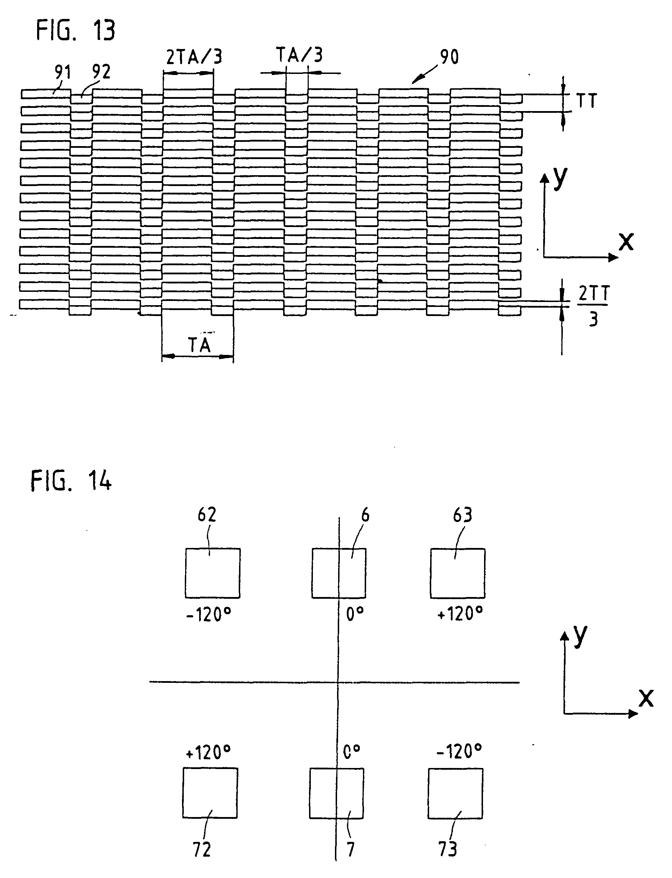

Durch die Erfindung kann grundsätzlich jedes Phasengitter nach dem Stand der Technik, bei dem der Phasenhub durch in Meßrichtung X abwechselnd angeordnete Stege und Lücken mit unterschiedlicher Höhe oder unterschiedlichem Brechungsindex realisiert ist, durch ein transversales Gitter mit transversal geometrisch gegeneinander phasenverschobenen Markierungen mehrerer Gitterbereiche ersetzt werden. So kann durch die Erfindung auch das Abtastgitter (Referenzgitter), welches bei der EP-0 163 362-B1 verwendet wird, besonders einfach realisiert werden. Zur Erzeugung von drei um 120° gegeneinander phasenverschobenen Signalen sind bei diesem weiteren erfindungsgemäßen Abtastgitter 90, welches in Figur 13 dargestellt ist, zwei transversale Gitterbereiche 91, 92 mit Markierungen gleicher Teilungsperiode TT vorgesehen, die um 2TT/3 (entsprechend 120°) transversal gegeneinander phasenverschoben sind. Die Gitterbereiche 91, 92 können wiederum als Amplituden- oder als Phasengitter ausgebildet sein. Besonders vorteilhaft ist es auch hier, die transversalen Gitterbereiche 91, 92 als Phasengitter auszubilden, dessen Parameter derart gewählt sind, daß die 0., ±2., ±4., ... transversalen Beugungsordnungen unterdrückt werden.

Die Breite der beiden Gitterbereiche 91, 92 bildet die Teilungsperiode TA. Einer der Gitterbereiche 91 besitzt eine Breite von 2TA/3 und der andere Bereich eine Breite von TA/3 (in Meßrichtung X betrachtet).

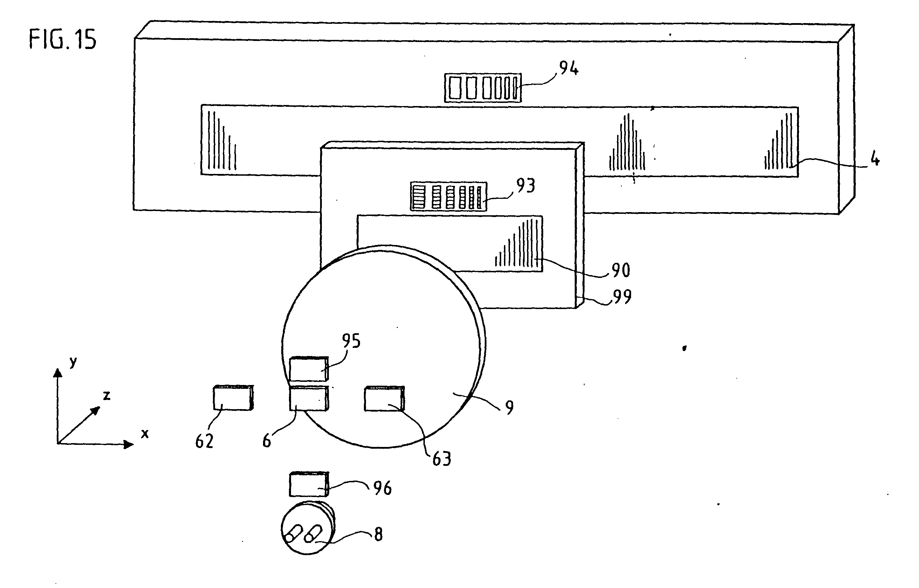

In Figur 15 ist eine Positionsmeßeinrichtung mit dem Abtastgitter 90 gemäß Figur 13 dargestellt. die Lichtquelle 8 beleuchtet über eine Kollimatorlinse 9 eine Abtastplatte 99 mit dem Abtastgitter 90. Die transmittierten Lichtstrahlenbündel treffen auf das reflektierende Maßstabgitter 4 und werden wiederum auf das Abtastgitter 90 gelenkt. In Meßrichtung X sowie transversal gebeugte Teilstrahlenbündel treffen auf die Fotodetektoren 6, 62, 63. Durch zweimalige transversale Beugung in +1. Beugungsordnung treffen die Teilstrahlenbündel der +2. resultierenden Beugungsordnung auf die Fotodetektoren 6, 62, 63.

In Figur 14 ist eine mögliche Anordnung von Fotodetektoren 6, 62, 63 sowie 7, 72, 73 dargestellt. Da die Fotodetektoren 7, 72, 73 aber die gleichen Signale (0°, 120°, -120°) wie die Fotodetektoren 6, 62, 63 erzeugen, werden sie bei der Positionsmeßeinrichtung in Figur 15 nicht genutzt.

Die Verwendung eines transversal ablenkenden Abtastgitters 90 hat den Vorteil, daß bei gleichzeitiger Abtastung einer Referenzmarke 93, 94 durch die Wahl der Gitterparameter der transversalen Gitterbereiche 91, 92 sowie der Referenzmarke 93 eine Trennung der Teilstrahlenbündel realisierbar ist. Es sind keine zusätzlichen Ablenkelemente in Form von Prismen erforderlich, um ein Übersprechen der Teilstrahlenbündel von der Referenzmarke 93, 94 sowie dem Maßstab- und Abtastgitter 4, 90 zu verhindern. Besonders vorteilhaft ist es, die Referenzmarken 93, 94 in bekannter Weise in Meßrichtung X als gechirptes Gitter insbesondere gemäß Figur 3 der EP-0 669 518-A2 auszubilden. Die gechirpten Gitterstreifen der Referenzmarke 93 besitzen eine transversale Teilung, damit mittels der Fotodetektoren 95, 96 zwei um 180° gegeneinander phasenverschobene Signale erzeugt werden können.

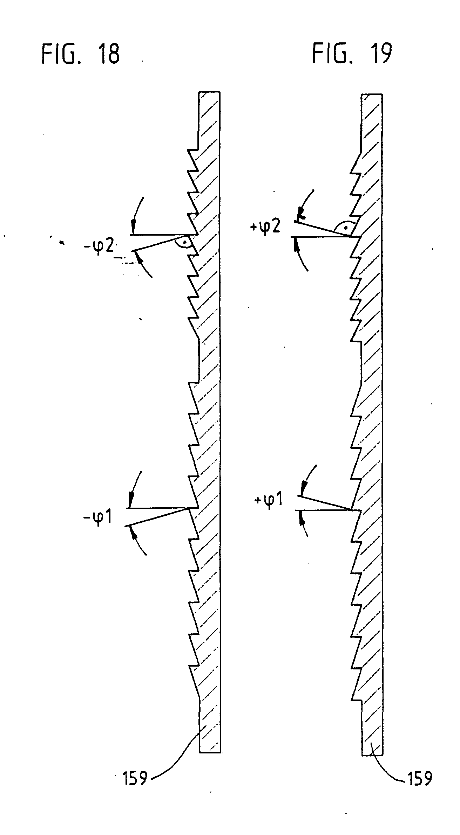

In Figur 16 ist eine weitere Positionsmeßeinrichtung gemäß der Erfindung dargestellt. Auf der Abtastplatte 159 sind die Abtastgitter 151 und 152 ausgebildet. Zur Abtastung des Maßstabgitters 4 sind zwei Gruppen von Abtastgittern 151, 152 vorgesehen. Jede Gruppe besteht aus zwei gleichartigen Abtastgittern 151 bzw. 152. Die zwei Abtastgitter 151 bzw. 152 einer jeden Gruppe sind um ein Vielfaches der longitudinalen Teilungsperiode TA versetzt zueinander angeordnet. Jedes Abtastgitter 151, 152 besteht wiederum aus fünf longitudinalen Teilungsperioden TA. Die Abtastgitter 151, 152 der beiden Gruppen unterscheiden sich im Gegensatz zum Ausführungsbeispiel gemäß Figur 8 nicht durch unterschiedliche transversale Teilungsperioden, sondern durch den Blaze-Winkel φ1, wie aus den Figuren 18 und 19 hervorgeht. Außerdem sind die Abtastgitter 152 der zweiten Gruppe um (m+1/4)TA gegenüber den Abtastgittern 151 der ersten Gruppe in Meßrichtung X beabstandet angeordnet, mit m=0, 1, 2 .... Die Abtastgitter 152 lenken durch den Blaze-Effekt das auftreffende Lichtbündel im wesentlichen nur in die +1. transversale Beugungsordnung. Nach Reflexion am Maßstabgitter 4 wird es beim zweiten Durchgang durch die Abtastgitter 152 wiederum in +1. transversaler Beugungsordnung abelenkt, so daß es in +2. resultierender transversaler Beugungsordnung austritt und durch die Linse 9 auf die, die verschiedenen longitudinalen Beugungsordnungen erfassenden Fotodetektoren 64, 65 fokussiert wird.

In analoger Weise wird durch den umgekehrten Blaze-Winkel φ1 der Abtastgitter 151 das zugehörige Lichtbündel auf die wiederum longitudinal voneinander beabstandeten Fotodetektoren 74, 75 gelenkt.

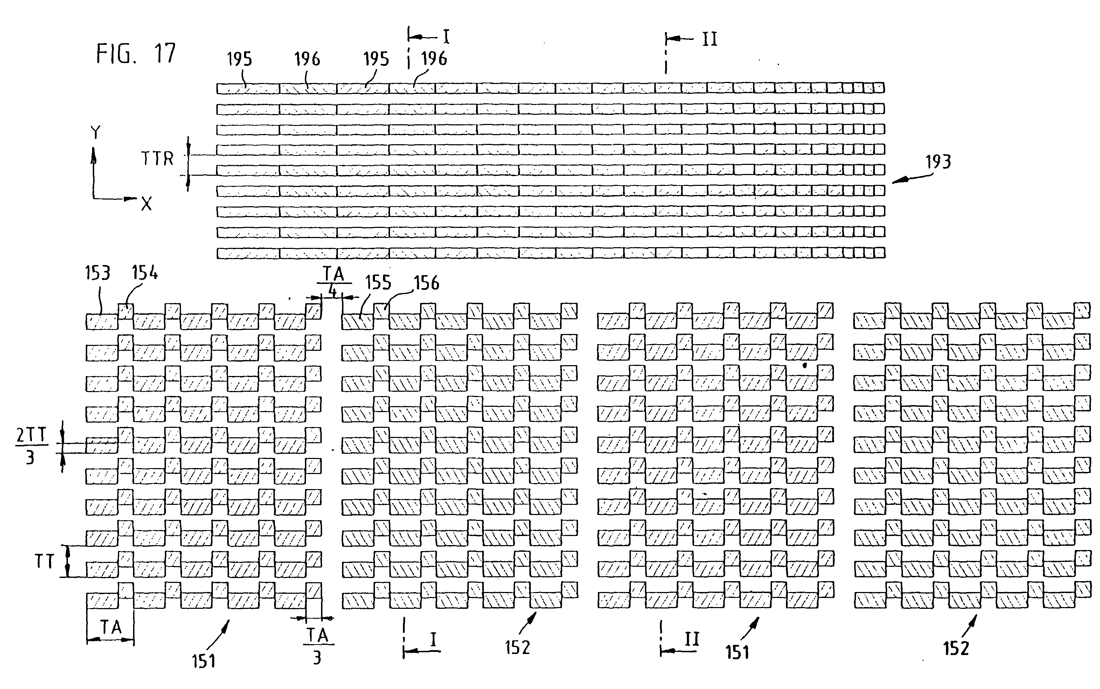

Durch eine geeignete Ausbildung der Gitterbereiche 153, 154 sowie 155, 156 der Abtastgitter 151, 152 können die aus den Fotodetektoren 64, 65 und 74, 75 gewonnenen Abtastsignale um einen gewünschten Wert gegeneinander phasenverschoben werden. Beispielsweise kann eine Phasenverschiebung von 90° zwischen den Abtastsignalen der Fotodetektoren 64 und 65 erreicht werden, wenn die transversalen Gitterbereiche 155, 156 die gleiche Teilungsperiode TT aufweisen und transversal um 2 TT/3 gegeneinander versetzt angeordnet sind. In Meßrichtung X betrachtet, bildet jeweils ein Gitterbereich 155 und ein Gitterbereich 156 eine Teilungsperiode TA, wobei die Breite des Gitterbereiches 155 etwa 2 TA/3 und die Breite des Gitterbereiches 156 etwa TA/3 beträgt. Wie in Figur 17 eingezeichnet ist, gelten für die Gitterbereiche 153 und 154 des Abtastgitters 151 die gleichen Verhältnisse, um eine Phasenverschiebung von 90° zwischen den Abtastsignalen der Fotodetektoren 74, 75 zu erreichen. Durch einen geometrischen Versatz des Gitterbereiches 152 gegenüber dem Gitterbereich 151 kann die Phasenverschiebung der Abtastsignale der Fotodetektoren 64, 65 gegenüber den Fotodetektoren 74, 75 eingestellt werden. Ist dieser Versatz beispielsweise TA/4, so sind die Abtastsignale der Fotodetektoren 64, 65 gegenüber den Fotodetektoren 74, 75 um 180° gegeneinander phasenverschoben. Man erhält somit auf einfache Weise die üblicherweise benötigten vier um 90° gegeneinander phasenverschobenen Abtastsignale und hat die Vorteile einer Einfeldabtastung. Die Lichtausbeute in den genutzten (±1.) transversalen Beugungsordnungen ist bei diesem Ausführungsbeispiel besonders groß, wenn man den geeigneten Blaze-Winkel φ1 der Gitterbereiche 153 bis 156 wählt. Die Bedingungen hierfür sind dem Fachmann an sich bekannt und in den einschlägigen Fachbüchern unter "Echelettegitter" zu finden. Die Verwendung der insbesondere in Figur 18 und 19 dargestellten Echelettegittern ist insbesondere dann vorteilhaft, wenn - wie bei sogenannten Dreigittergebern (EP-0 163 362-B1) - die +n-ten und -n-ten transversalen Beugungsordnungen gleichphasig moduliert werden und somit keine zusätzliche Information liefern können.

Zu besserer Unterscheidung der Blaze-Winkel φ1 sind die Gitterbereiche 153, 154 mit dem nach unten gerichteten Blaze-Winkel φ1 in Figur 17 anders schraffiert als die Gitterbereiche 155, 156 mit nach oben gerichtetem Blaze-Winkel φ1.

Bei diesem Ausführungsbeispiel besteht auch die Referenzmarke 193 aus einem gechirpten Abtastgitter, das aus in Meßrichtung X abwechselnd angeordneten Gitterbereichen 195 und 196 besteht, deren Breiten in Meßrichtung X kontinuierlich abnehmen. Die Gitterbereiche 195 und 196 besitzen entgegengesetzte Blaze-Winkel φ2, wie im Schnitt I-I und II-II in den Figuren 18 und 19 zu sehen ist. Die Gitterbereiche 195 lenken das auftreffende Lichtbündel auf den Fotodetektor 95, die Gitterbereiche 196 lenken das auftreffende Lichtbündel auf den Fotodetektor 96. Die Fotodetektoren 95 und 96 liefern somit das Takt- gzw. Gegentaktsignal der gechirpten Referenzmarke 194.

Durch die Verwendung von transversalen Gitterbereichen 153 bis 156 und 195, 196 für sowohl die Inkremental- als auch für die Referenzmarkenabtastung ist es durch unterschiedliche Wahl der transversalen Teilungsperioden TT, TTR und/oder der Blaze-Winkel φ1, φ2 leicht möglich, die einzelnen gebeugten Lichtbündel in der Brennebene der Linse 9 zu trennen. Damit sind keine aufwendigen, lichtablenkenden Mittel wie Prismen oder Spiegel mehr erforderlich. Die dargestellten geblazten Gitter können besonders vorteilhaft durch Prägen hergestellt werden.

Ein besonderer Vorteil der erfindungsgemäßen Abtastgitter 1, 10, 20, 30, 40, 51, 52, 80, 50, 90 ist, daß die lokale Phasenverschiebung des in + n-ter und - n-ter (n = 1, 2, 3 ...) transversaler Beugungsordnung gebeugten Strahlenbündels nicht vom Phasenhub und der Stegbreite des transversalen Gitters abhängt, sondern allein durch den geometrischen Versatz der transversalen Gitterbereiche 2, 3, 11 bis 14, 21 bis 24, 31, 32, 41, 42, 53 bis 56, 81, 82, 91, 92 gegeben ist. Dadurch sind die Toleranzen von Phasenhub und Stegbreite der transversalen Gitterbereiche 2, 3, 11 bis 14, 21 bis 24, 31, 32, 41, 42, 53 bis 56, 81, 82, 91, 92 groß, so daß die Herstellung gegenüber herkömmlichen Phasenteilungen kostengünstig ist.

Bei allen Ausführungsformen kann das Abtastgitter als Phasenstruktur in Form des in Figur 2 dargestellten Oberflächenreliefs oder als Phasenstruktur durch ortsabhängig variablen Brechungsindex oder aber auch als Amplitudenstruktur in Form von ortsabhängig variabler Reflexion, Absorption oder Transmission ausgeführt sein. Die Phasenstruktur hat den besonderen Vorteil, daß - wie bereits erläutert - die Lichtintensität in bestimmte Beugungsordnungen gelenkt werden kann. So ist es besonders vorteilhaft, die ±1. Beugungsordnungen auszunutzen, es könnten aber gemäß der Erfindung auch andere Beugungsordnungen verwendet werden.

Da bei dem erfindungsgemäßen Gitter sowohl die Lage der Markierungen in Y-Richtung als auch deren Breite in Y- und X-Richtung lokal beliebig gewählt werden können, läßt sich damit auf einfache Weise eine beliebige Kombination zwischen einer Phasenteilung und einer Amplitudenteilung herstellen. Dadurch können mit dem erfindungsgemäßen Gitter die gewünschten Phasenverschiebungen der direkt von diesem Gitter abgeleiteten Abtastsignale gewählt und zusätzlich die Abtastsignale optimiert werden.

Es ist besonders vorteilhaft, wenn die in Meßrichtung X relativ kleine Abtastplatte erfindungsgemäß ausgebildet ist. Es liegt aber auch im Rahmen der Erfindung, den Maßstab entsprechend auszugestalten.

Bei allen Beispielen können die Fotodetektoren in unterschiedlichen Abständen, das heißt abhängig vom Einfallswinkel der auf die Linse 5 bzw. 9 fallenden Teilstrahlenbündel angeordnet sein, wie in der EP-0 576 720-A2 ausführlich erläutert.

Die Erfindung ist bei Längen- und Winkelmeßeinrichtungen einsetzbar.


**Patentansprüche**

1. Lichtelektrische Positionsmeßeinrichtung, bei der Licht einer Lichtquelle (8) von mehreren in Meßrichtung (X) relativ zueinander verschiebbaren Gittern (4, 1, 10, 20, 30, 40, 51, 52, 80, 50, 90, 151, 152) positionsabhängig moduliert wird, indem gebeugte Lichtstrahlenbündel miteinander interferieren und mehrere Fotodetektoren (6, 7, 61, 62, 63, 64, 65, 71, 72, 73, 74, 75) zur Bildung positionsabhängiger, gegeneinander phasenverschobener Signale vorgesehen sind, wobei zumindest eines der Gitter (1, 10, 20, 30, 40, 51, 52, 80, 50, 90, 151, 152) mehrere in Meßrichtung (X) hintereinander angeordnete transversale Gitterbereiche (2, 3, 11 bis 14, 21 bis 24, 31, 32, 41, 42, 53 bis 56, 81, 82, 91, 92, 153 bis 156) gleicher oder nur unwesentlich unterschiedlicher transversaler Teilungsperiode (TT, TT1, TT2) quer zur Meßrichtung (X) aufweist, indem jeder dieser Gitterbereiche (2, 3, 11 bis 14, 21 bis 24, 31, 32, 41, 42, 53 bis 56, 81, 82, 91, 92, 153 bis 156) periodische Markierungen besitzt, die im wesentlichen transversal beabstandet sind, und die Gitterbereiche (2, 3, 11 bis 14, 21 bis 24, 31, 32, 41, 42, 53 bis 56, 81, 82, 91, 92, 153 bis 156) quer zur Meßrichtung gegeneinander phasenverschoben angeordnet sind, wobei diese Phasenverschiebung von 180° abweicht, und daß an diesen Markierungen transversal gebeugte Teilstrahlenbündel auf die Fotodetektoren (6, 7, 61 bis 65, 71 bis 75) gerichtet sind.

2. Lichtelektrische Positionsmeßeinrichtung nach Anspruch 1, dadurch gekennzeichnet, daß die Markierungen eines Gitterbereiches (2, 3, 11 bis 14, 21 bis 24, 53 bis 56, 81, 82, 91, 92, 153 bis 156) parallele Gitterstriche sind, die mit der Meßrichtung (X) einen Winkel von 0° einschließen.

3. Lichtelektrische Positionsmeßeinrichtung nach Anspruch 1 oder 2, dadurch gekennzeichnet, daß die Gitterbereiche (2, 3, 11 bis 14, 21 bis 24, 53 bis 56, 81, 82, 91, 92, 153 bis 156) in Form eines Amplitudengitters oder Phasengitters ausgebildet sind.

4. Lichtelektrische Positionsmeßeinrichtung nach Anspruch 3, dadurch gekennzeichnet, daß die Gitterbereiche (2, 3, 11 bis 14, 21 bis 24, 53 bis 56, 81, 82, 91, 92, 153 bis 156) ein Phasengitter bilden, dessen Parameter derart gewählt sind, daß die nullte transversale Beugungsordnung (0.) unterdrückt wird.

5. Lichtelektrische Positionsmeßeinrichtung nach einem der Ansprüche 1 bis 4, dadurch gekennzeichnet, daß an den transversal versetzt angeordneten Gitterbereichen (2, 3, 53 bis 56) jeweils Teilstrahlenbündel in +1. und -1. Beugungsordnung erzeugt werden und ein Fotodetektor (6, 61) zur Erfassung der +1. und ein weiterer Fotodetektor (7, 71) zur Erfassung der -1. Beugungsordnungen vorgesehen ist, und daß die Signale der beiden Fotodetektoren (6, 7; 61, 71) gegeneinander phasenverschoben sind.

6. Lichtelektrische Positionsmeßeinrichtung nach einem der Ansprüche 1 bis 5, dadurch gekennzeichnet, daß zwei Gitterbereiche (2, 3, 11 bis 14, 21 bis 24, 31, 32, 41, 42, 53 bis 56, 81, 82, 91, 92) mit transversalen Markierungen gleicher Teilungsperiode (TT, TT1, TT2) vorgesehen sind, die quer zur Meßrichtung (X) um 1/4 der transversalen Teilungsperiode (TT, TT1, TT2) versetzt sind.

7. Lichtelektrische Positionsmeßeinrichtung nach einem der Ansprüche 1 bis 5, dadurch gekennzeichnet, daß zwei Gitterbereiche (91, 92, 153 bis 156) mit transversalen Markierungen gleicher Teilungsperiode (TT) vorgesehen sind, die quer zur Meßrichtung (X) um etwa 2/3 der transversalen Teilungsperiode (TT) zueinander versetzt angeordnet sind.

8. Lichtelektrische Positionsmeßeinrichtung nach einem der Ansprüche 1 bis 7, dadurch gekennzeichnet, daß die Breite der Markierungen der transversal zueinander versetzten Gitterbereiche (2, 3, 11 bis 14, 21 bis 24, 31, 32, 41, 42, 53 bis 56, 81, 82) in Meßrichtung X gleich ist.

9. Lichtelektrische Positionsmeßeinrichtung nach einem der Ansprüche 1 bis 7, dadurch gekennzeichnet, daß das Verhältnis der Breiten der Markierungen der transversal zueinander versetzten Gitterbereiche (91, 92, 153 bis 156) in Meßrichtung (X) 2 zu 1 ist.

**10.** Lichtelektrische Positionsmeßeinrichtung nach Anspruch 9, dadurch gekennzeichnet, daß die zwei Gitterbereiche (91, 92 bzw. 153 bis 156) mit gleicher transversaler Teilungsperiode (TT) quer zur Meßrichtung (X) um etwa 2/3 der transversalen Teilungsperiode (TT) gegeneinander versetzt sind.

**11.** Lichtelektrische Positionsmeßeinrichtung nach einem der Ansprüche 1, 3 bis 10, dadurch gekennzeichnet, daß die Phasenverschiebung der Markierungen quer zur Meßrichtung (X) kontinuierlich, insbesondere sinusförmig verläuft.

**12.** Lichtelektrische Positionsmeßeinrichtung nach einem der Ansprüche 1, 3 bis 11, dadurch gekennzeichnet, daß die Breite (b) der transversalen Markierungen senkrecht zur Meßrichtung abhängig vom Weg in der Meßrichtung (X) variiert.

**13.** Lichtelektrische Positionsmeßeinrichtung nach einem der Ansprüche 1 bis 13, dadurch gekennzeichnet, daß die lokale transversale Teilungsperiode (TT) der transversalen Gitterbereiche (81, 82) in Abhängigkeit vom Weg (Y) quer zur Meßrichtung (X) stetig variiert, wobei die dadurch unterschiedlich stark abgelenkten Teilstrahlenbündel vorgegebener +1. und -1. Beugungsordnung von einem gemeinsamen Fotodetektor (6, 7) erfaßt werden.

**14.** Lichtelektrische Positionsmeßeinrichtung nach einem der vorhergehenden Ansprüche, dadurch gekennzeichnet, daß mehrere Gitterbereiche (53 bis 56) unterschiedlicher transversaler Teilungsperiode (TT1, TT2) vorgesehen sind, wobei die Gitterbereiche (53, 54; 55, 56) mit der gleichen Teilungsperiode (TT1, TT2) jeweils eine Gruppe bilden, und daß die Gitterbereiche (53, 54) einer Gruppe gegenüber den Gitterbereichen (55, 56) einer anderen Gruppe um einen Bruchteil oder einem Bruchteil zuzüglich einem Vielfachen einer longitudinalen Teilungsperiode (TA) in Meßrichtung (X) phasenverschoben angeordnet sind.

**15.** Lichtelektrische Ppsitionsmeßeinrichtung nach einem der vorhergehenden Ansprüche, dadurch gekennzeichnet, daß mehrere Gitterbereiche (153 bis 156) als Echelettegitter mit unterschiedlichem Blaze-Winkel (φ1) vorgesehen sind, wobei die Gitterbereiche (153, 154 bzw. 155, 156) mit dem gleichen Blaze-Winkel (φ1) jeweils eine Gruppe bilden, und daß die Gitterbereiche (153, 154) einer Gruppe gegenüber den Gitterbereichen (155, 156) einer anderen Gruppe um einen Bruchteil oder einen Bruchteil zuzüglich einem Vielfachen einer longitudinalen Teilungsperiode (TA) in Meßrichtung (X) phasenverschoben angeordnet sind.

**16.** Lichtelektrische Positionsmeßeinrichtung nach Anspruch 14 oder 15, dadurch gekennzeichnet, daß zwei Gruppen vorgesehen sind, die in Meßrichtung (X) um (m+1/4)TA mit m = 0, 1, 2, ... angeordnet sind.

**17.** Lichtelektrische Positionsmeßeinrichtung nach einem der Ansprüche 14 bis 16, dadurch gekennzeichnet, daß an ersten transversal gegeneinander versetzten Gitterbereichen (53, 54 bzw. 153, 154) gleicher erster Teilungsperiode (TT1) oder erstem Blaze-Winkel (φ1) erste gebeugte Lichtstrahlenbündel auf mehrere Fotodetektoren (61, 71 bzw. 74, 75) gerichtet sind und erste gegeneinander phasenverschobene Abtastsignale erzeugt werden, und daß weitere transversal zueinander versetzte Gitterbereiche (55, 56 bzw. 155, 156) vorgesehen sind, dessen Teilungsperiode (TT2) und/oder Blaze-Winkel (φ1) von den ersten Gitterbereichen (53, 54 bzw. 153, 154) abweicht, wobei an diesen zweiten Gitterbereichen (55, 56 bzw. 155, 156) zweite gebeugte Lichtstrahlenbündel auf weitere Fotodetektoren (6, 7 bzw. 64, 65) gerichtet sind und zumindest ein weiteres, gegenüber zumindest einem der ersten Abtastsignale phasenverschobenes Abtastsignal erzeugt wird.

**18.** Lichtelektrische Positionsmeßeinrichtung nach Anspruch 1, dadurch gekennzeichnet, daß das Licht der Lichtquelle (8) mittels einer Linse (9) kollimiert auf eine Abtastplatte (19, 59) mit einem Abtastgitter (1, 51, 52) trifft, daß nach der Abtastplatte (19, 59) ein Maßstabgitter (4) vorgesehen ist und vom Maßstabgitter (4) transmittierende Teilstrahlenbündel mittels einer weiteren Linse (5) auf mehrere Fotodetektoren (6, 7, 61, 71) fokussiert werden, wobei das Abtastgitter (1, 51, 52) nach einem der vorhergehenden Ansprüche ausgebildet ist.

**19.** Lichtelektrische Positionsmeßeinrichtung nach Anspruch 1, dadurch gekennzeichnet, daß das Licht der Lichtquelle (8) mittels einer Linse (9) kollimiert auf eine Abtastplatte (59, 99) mit einem Abtastgitter (51, 52, 90) trifft, daß nach der Abtastplatte (59, 99) ein reflektierendes Maßstabgitter (4) vorgesehen ist und die reflektierten Teilstrahlenbündel wieder durch das Abtastgitter (51, 52, 90) gebeugt werden und mittels der Linse (9) auf mehrere Fotodetektoren (6, 7, 61, 71, 62, 63) fokussiert werden, wobei das Abtastgitter (51, 52, 90) nach einem der vorhergehenden Ansprüche ausgebildet ist.

**20.** Lichtelektrische Positionsmeßeinrichtung, nach Anspruch 18 oder 19, dadurch gekennzeichnet, daß das Maßstabgitter (4) und das Abtastgitter (1, 51, 52) in Meßrichtung (X) die gleiche Teilungsperiode (TM=TA) aufweisen.

**21.** Lichtelektrische Positionsmeßeinrichtung nach Anspruch 20, dadurch gekennzeichnet, daß das Maßstabgitter (4) ein Amplituden- oder Phasengitter ist.

## Claims

1. Photoelectric position measuring device, in which the light from a light source (8) is modulated, depending on position, by a plurality of grids (4, 1, 10, 20, 30, 40, 51, 52, 80, 50, 90, 151, 152) which are displaceable relative to one another in the measurement direction (X), by diffracted light ray bundles interfering with one another and a plurality of photodetectors (6, 7, 61, 62, 63, 64, 65, 71, 72, 73, 74, 75) being provided to form position-dependent signals which are phase-shifted in relation to one another, at least one of the grids (1, 10, 20, 30, 40, 51, 52, 80, 50, 90, 151, 152) having, transversely with respect to the measurement direction (X), a plurality of transverse grid regions (2, 3, 11 to 14, 21 to 24, 31, 32, 41, 42, 53 to 56, 81, 82, 91, 92, 153 to 156), disposed the one behind the other in the measurement direction (X), of identical or only insignificantly different transverse division periods (TT, TT1, TT2), by each of these grid regions (2, 3, 11 to 14, 21 to 24, 31, 32, 41, 42, 53 to 56, 81, 82, 91, 92, 153 to 156) having periodic marks which are spaced from one another substantially transversely, and the grid regions (2, 3, 11 to 14, 21 to 24, 31, 32, 41, 42, 53 to 56, 81, 82, 91, 92, 153 to 156) being disposed transversely with respect to the measurement direction and phase-shifted in relation to one another, this phase shift differing from 180°, and in that partial ray bundles diffracted transversely at these marks are directed to the photodetectors (6, 7, 61 to 65, 71 to 75).

2. Photoelectric position measuring device according to claim 1, **characterised in that** the marks of a grid region (2, 3, 11 to 14, 21 to 24, 53 to 56, 81, 82, 91, 92, 153 to 156) are parallel grid lines which enclose with the measurement direction (X) an angle of 0°.

3. Photoelectric position measuring device according to claim 1 or 2, **characterised in that** the grid regions (2, 3, 11 to 14, 21 to 24, 53 to 56, 81, 82, 91, 92, 153 to 156) are configured in the form of an amplitude grid or phase grid.

4. Photoelectric position measuring device according to claim 3, **characterised in that** the grid regions (2, 3, 11 to 14, 21 to 24, 53 to 56, 81, 82, 91, 92, 153 to 156) form a phase grid, the parameters of which are selected in such a manner that the zero transverse order of diffraction (0.) is suppressed.

5. Photoelectric position measuring device according to one of claims 1 to 4, **characterised in that** at the grid regions (2, 3, 53 to 56) disposed offset transversely, respectively partial ray bundles in the +1 and -1 order of diffraction are generated and a photodetector (6, 61) is provided to detect the +1 order of diffraction and a further photodetector (7, 71) to detect the -1 order of diffraction, and in that the signals of the two photodetectors are phase-shifted in relation to one another.

6. Photoelectric position measuring device according to one of claims 1 to 5, **characterised in that** two grid regions (2, 3, 11 to 14, 21 to 24, 31, 32, 41, 42, 53 to 56, 81, 82, 91, 92) are provided with transverse marks of the same division period (TT, TT1, TT2), which are displaced transversely with respect to the measurement direction (X) by 1/4 of the transverse division period (TT, TT1, TT2).

7. Photoelectric position measuring device according to one of claims 1 to 5, **characterised in that** two grid regions (91, 92, 153 to 156) are provided with transverse marks of the same division period (TT), which are disposed transversely with respect to the measurement direction (X) displaced in relation to one another by roughly 2/3 of the transverse division period (TT).

8. Photoelectric position measuring device according to one of claims 1 to 7, **characterised in that** the width of the marks of the grid regions (2, 3, 11 to 14, 21 to 24, 31, 32, 41, 42, 53 to 56, 81, 82) displaced transversely in relation to one another is identical in measurement direction X.

9. Photoelectric position measuring device according to one of claims 1 to 7, **characterised in that** the ratio of the widths of the marks of grid regions (91, 92, 153 to 156) displaced transversely in relation to one another in the measurement direction (X) is 2 to 1.

10. Photoelectric position measuring device according to claim 9, **characterised in that** the two grid regions (91, 92 or 153 to 156) with the same transverse division period (TT) are displaced in relation to one another transversely with respect to the measurement direction (X) by roughly 2/3 of the transverse division period (TT).

11. Photoelectric position measuring device according to one of claims 1, 3 to 10, **characterised in that** the phase shift of the marks transversely with respect to the measurement direction (X) runs continuously, especially in a sinusoid manner.

12. Photoelectric position measuring device according to one of claims 1, 3 to 11, **characterised in that** the width (b) of the transverse marks perpendicular to the measurement direction varies in dependence on the path in the measurement direction (X).

13. Photoelectric position measuring device according to one of claims 1 to 13, **characterised in that** the local transverse division period (TT) of the transverse grid regions (81, 82) varies constantly in dependence on path (Y) transversely with respect to the measurement direction (X), the partial ray bundles of the predetermined +1 and -1 order of diffraction, which are thus diffracted to varying extents, being detected by a common photodetector (6, 7).

14. Photoelectric position measuring device according to one of the preceding claims, **characterised in that** a plurality of grid regions (53 to 56) of a different transverse division period (TT1, TT2) is provided, the grid regions (53, 54; 55, 56) with the same division period (TT1, TT2) in each case forming one group, and in that the grid regions (53, 54) of one group are disposed phase-shifted in the measurement direction (X) in relation to the grid regions (55, 56) of another group by a fraction, or a fraction plus a multiple, of a longitudinal division period (TA).

15. Photoelectric position measuring device according to one of the preceding claims, **characterised in that** a plurality of grid regions (153 to 156) are provided as echelette gratings having differing blaze angles ($\varphi$1), the grid regions (153, 154 or 155, 156) with the same blaze angle ($\varphi$1) in each case forming one group, and in that the grid regions (153, 154) of one group are disposed phase-shifted in measurement direction (X) in relation to the grid regions (155, 156) of another group by a fraction, or a fraction plus a multiple, of a longitudinal division period (TA).

16. Photoelectric position measuring device according to claim 14 or 15, **characterised in that** two groups are provided which are disposed in the measurement direction (X) by (m+1/4)TA with m = 0, 1, 2, ...

17. Photoelectric position measuring device according to one of claims 14 to 16, **characterised in that** at first grid regions (53, 54 or 153, 154), displaced transversely in relation to one another, of the same first division period (TT1) or first blaze angle ($\varphi$1), first diffracted light ray bundles are directed to a plurality of photodetectors (61, 71 or 74, 75) and first scanning signals, phase-shifted in relation to one another, are created, and in that additional grid regions (55, 56 or 155, 156), displaced transversely in relation to one another, are provided, the division period (TT2) and/or blaze angle ($\varphi$1) of which differs from the first grid regions (53, 54 or 153, 154), second diffracted light ray bundles being directed at these second grid regions (55, 56 or 155, 156) to additional photodetectors (6, 7 or 64, 65) and at least one further scanning signal being generated which is phase-shifted in relation to at least one of the first scanning signals.

18. Photoelectric position measuring device according to claim 1, **characterised in that** the light from the light source (8) impinges collimated by means of a lens (9) on a scanning plate (19, 59) with a scanning grid (1, 51, 52), in that after the scanning plate (19, 59) a measurement scale grid (4) is provided, and partial ray bundles transmitting from the measurement scale grid are focussed by means of a further lens (5) on a plurality of photodetectors (6, 7, 61, 71), the scanning grid (1, 51, 52) being configured according to one of the preceding claims.

19. Photoelectric position measuring device according to claim 1, **characterised in that** the light from the light source (8) impinges collimated by means of a lens (9) on a scanning plate (59, 99) with a scanning grid (51, 52, 90), in that after the scanning plate (59, 99) a reflecting measurement scale grid (4) is provided, and the reflected partial ray bundles are diffracted again by the scanning grid (51, 52, 90) and focussed by means of a lens (9) on a plurality of photodetectors (6, 7, 61, 71, 62, 63)), the scanning grid (51, 52, 90) being configured according to one of the preceding claims.

20. Photoelectric position measuring device according to claim 18 or 19, **characterised in that** the measurement scale grid (4) and scanning grid (1, 51, 52) have the same division period (TM=TA) in the measurement direction (X).

21. Photoelectric position measuring device according to claim 20, **characterised in that** the measurement scale grid (4) is an amplitude or phase grid.

## Revendications

1. Dispositif de mesure de position opto-électrique, dans lequel la lumière d'une source de lumière (8) est modulée en fonction de la position par plusieurs réseaux (4, 1, 10, 20, 30, 40, 51, 52, 80, 50, 90, 151, 152) pouvant se déplacer les uns par rapport aux autres, dans lequel des faisceaux de rayons lumineux diffractés interfèrent les uns avec les autres, et plusieurs détecteurs opto-électriques (6, 7, 61, 62, 63, 64, 65, 71, 72, 73, 74, 75) sont prévus pour former des signaux mutuellement déphasés, au moins un des réseaux (1, 10, 20, 30, 40, 51, 52, 80, 50, 90, 151, 152) comportant, les unes à la suite des autres dans la direction de mesure (X), plusieurs zones de réseau (2, 3, 11 à 14, 21 à 24, 31, 32, 41, 42, 53 à 56, 81, 82, 91, 92, 153 à 156) transversales avec une période de division transversale (TT, TT1, TT2) identique ou seulement très faiblement différente, transversalement à la direction de mesure (X), dans lequel chacune des zones de réseau (2, 3, 11 à 14, 21 à 24, 31, 32, 41, 42, 53 à 56, 81, 82, 91, 92, 153 à 156) comporte des repères périodiques, espacés essentiellement dans la direction transversale, et les zones de réseau (2, 3, 11 à 14, 21 à 24, 31, 32, 41, 42, 53 à 56, 81, 82, 91, 92, 153 à 156) sont mutuellement déphasées transversalement à la direction de mesure, le déphasage étant différent de 180°, et dans lequel les faisceaux de rayons partiels diffractés transversalement au niveau de ces repères sont dirigés sur les détecteurs opto-électriques (6, 7, 61 à 65, 71 à 75).

2. Dispositif de mesure de position opto-électrique selon la revendication 1, caractérisé en ce que les repères d'une zone de réseau (2, 3, 11 à 14, 21 à 24, 31, 32, 41, 42, 53 à 56, 81, 82, 91, 92, 153 à 156) sont des traits parallèles qui forment un angle de 0° avec la direction de mesure (X).

3. Dispositif de mesure de position opto-électrique selon la revendication 1 ou 2, caractérisé en ce que les zones de réseau (2, 3, 11 à 14, 21 à 24, 31, 32, 41, 42, 53 à 56, 81, 82, 91, 92, 153 à 156) sont agencées sous la forme de réseau d'amplitude ou de réseau de phase.

4. Dispositif de mesure de position opto-électrique selon la revendication 3, caractérisé en ce que les zones de réseau (2, 3, 11 à 14, 21 à 24, 31, 32, 41, 42, 53 à 56, 81, 82, 91, 92, 153 à 156) forment un réseau de phase dont les paramètres sont choisis de manière à éliminer l'ordre de diffraction transversale "zéro" (O.).

5. Dispositif de mesure de position opto-électrique selon une des revendications 1 à 4, caractérisé en ce que des faisceaux de rayons partiels respectivement d'ordre +1 et -1 sont formés au niveau des zones de réseau (2, 3, 53 à 56) décalées dans la direction transversale et qu'il est prévu un détecteur opto-électrique (6, 61) pour détecter l'ordre de diffraction +1 et un détecteur opto-électrique (7, 71) supplémentaire pour détecter l'ordre de diffraction -1, et en ce que les signaux des deux détecteurs opto-électriques (6, 7; 61, 71) sont mutuellement déphasés.

6. Dispositif de mesure de position opto-électrique selon une des revendications 1 à 5, caractérisé en ce qu'il est prévu deux zones de réseau (2, 3, 11 à 14, 21 à 24, 31, 32, 41, 42, 53 à 56, 81, 82, 91, 92) avec des repères transversaux présentant une même période de division (TT, TT1, TT2), qui sont décalés les uns par rapport aux autres de 1/4 de la période de division transversale (TT, TT1, TT2), transversalement à la direction de mesure (X).

7. Dispositif de mesure de position opto-électrique selon une des revendications 1 à 5, caractérisé en ce qu'il est prévu deux zones de réseau (91, 92, 153 à 156) avec des repères transversaux présentant une même période de division (TT) qui sont décalés les uns par rapport aux autres de 2/3 de la période de division transversale (TT), transversalement à la direction de mesure (X).

8. Dispositif de mesure de position opto-électrique selon une des revendications 1 à 7, caractérisé en ce que la largeur des repères des zones de réseau (2, 3, 11 à 14, 21 à 24, 31, 32, 41, 42, 53 à 56, 81, 82, 91, 92, 153 à 156) mutuellement décalées dans la direction transversale est constante dans la direction de mesure (X).

9. Dispositif de mesure de position opto-électrique selon une des revendications 1 à 7, caractérisé en ce que le rapport des largeurs des repères des zones de réseau (91, 92, 153 à 156) mutuellement décalées dans la direction transversale dans la direction de mesures (X) est 2:1.

10. Dispositif de mesure de position opto-électrique selon la revendication 9, caractérisé en ce que les deux zones de réseau (91, 92 ou 153 à 156) présentant une même période de division (TT) transversale sont mutuellement décalées transversalement à la direction de mesure (X) d'environ 2/3 de la période de division (TT) transversale.

11. Dispositif de mesure de position opto-électrique selon une des revendications 1,3 à 10, caractérisé en ce que le déphasage des repères transversalement à la direction de mesure (X) est continu, en particulier est sinusoïdal.

12. Dispositif de mesure de position opto-électrique selon une des revendications 1,3 à 11, caractérisé en ce que la largeur (b) des repères transversaux, perpendiculairement à la direction de mesure, varie en fonction du déplacement dans la direction de mesure (X).

13. Dispositif de mesure de position opto-électrique selon une des revendications 1 à 12, caractérisé en ce que la période de division transversale (TT) locale des zones de réseau (81, 82) transversales varie de manière continue en fonction du déplacement (Y) transversalement à la direction de mesure (X), les faisceaux de rayons partiels subissant des diffractions plus ou moins grandes d'ordre de diffraction +1 et -1 prédéterminé étant détectés par un détecteur opto-électrique (6, 7) commun.

14. Dispositif de mesure de position opto-électrique selon une des revendications précédentes, caractérisé en ce qu'il est prévu plusieurs zones de réseau (53 à 56) avec des périodes de division transversale (TT1, TT2) différentes, les zones de réseau (53, 54; 55, 56) à période de division (TT1, TT2) identique formant chaque fois un groupe et en ce que les zones de réseau (53, 54) d'un groupe sont déphasées par rapport aux zones de réseau (55, 56) d'un autre groupe d'une fraction de la période de division (TA) longitudinale ou d'une fraction plus un multiple de la période de division (TA) longitudinale dans la direction de mesure (X).

15. Dispositif de mesure de position opto-électrique selon une des revendications précédentes, caractérisé en ce que plusieurs zones de réseau (153 à 156) sont aménagées en grilles échellettes avec des angles de gradins ($\varphi$1), les zones de réseau (153, 154 ou 155, 156) avec le même angle de gradin ($\varphi$1) formant chaque fois un groupe et en ce que les zones de réseau (153, 154) d'un groupe sont déphasées par rapport aux zones de réseau (55, 56) d'un autre groupe d'une fraction de la période de division (TA) longitudinale ou d'une fraction plus un multiple de la période de division (TA) longitudinale dans la direction de mesure (X).

16. Dispositif de mesure de position opto-électrique selon la revendication 14 ou 15, caractérisé en ce qu'il est prévu deux groupes qui sont décalés de (m+1/4) TA, avec m=0, 1,2,... dans la direction de mesure (X).

17. Dispositif de mesure de position opto-électrique selon une des revendications 14 à 16, caractérisé en ce que dans des premières zones de réseau (53, 54 et,154) décalées les unes par rapport aux autres dans la direction transversale, ayant une même première période de division (TT1) ou un même premier angle de gradin ($\varphi$1), des premiers faisceaux de rayons diffractés sont dirigés sur plusieurs détecteurs opto-électriques (61, 71 et 74, 75) et en ce qu'il est prévu des zones de réseau (55, 56 et 155, 156) supplémentaires décalées les unes par rapport aux autres dans la direction transversale, dont la période de division (TT2) et/ou l'angle de gradin ($\varphi$1) sont différents de ceux des premières zones de réseau (53, 54 et 153, 154), des second faisceaux de rayons diffractés étant dirigés par ces deuxièmes zones de réseau (55, 56 et 155, 156) sur des détecteurs opto-électriques (6, 7 et 64, 65) supplémentaires et au moins un signal de palpage supplémentaire déphasé par rapport aux premiers signaux de palpage étant produit.

18. Dispositif de mesure de position opto-électrique selon la revendication 1, caractérisé en ce que la lumière de la source de lumière (8) collimatée à l'aide d'une lentille (9) arrive sur une plaque de palpage (19, 59) portant un réseau de palpage (1, 51, 52), en ce qu'il est prévu à la suite de la plaque de palpage (19, 59) un réseau de règle (4) et que les faisceaux de rayons partiels transmis par le réseau de règle (4) sont focalisés au moyen d'une lentille (5) supplémentaire sur plusieurs détecteurs opto-électriques (6, 7, 61, 71), le réseau de palpage (1, 51, 52) étant agencé conformément à l'une des revendications précédentes.

19. Dispositif de mesure de position opto-électrique selon la revendication 1, caractérisé en ce que la lumière de la source de lumière (8) collimatée à l'aide d'une lentille (9) arrive sur une plaque de palpage (59, 99) portant un réseau de palpage ( 51, 52, 90), en ce qu'il est prévu à la suite de la plaque de palpage (59, 99) un réseau de règle (4)réfléchissant et que les faisceaux de rayons partiels réfléchis par le réseau de règle (4) sont de nouveau diffractés par le réseau de palpage (51, 52, 90) et sont focalisés au moyen de la lentille (9) supplémentaire sur plusieurs détecteurs opto-électriques (6, 7, 61, 71, 62, 63),1 e réseau de palpage ( 51, 52, 90) étant agencé conformément à l'une des revendications précédentes.

20. Dispositif de mesure de position opto-électrique selon la revendication 18 ou 19, caractérisé en ce que le réseau de règle (4) et le réseau de palpage (1, 51, 52), dans la direction de mesure (X), présentent la même période de division (TM=TA).

21. Dispositif de mesure de position opto-électrique selon la revendication 20, caractérisé en ce que le réseau de règle (4) est un réseau d'amplitude ou un réseau de phase.

FIG. 1

FIG. 2

FIG. 3

EP 0 735 346 B1

EP 0 735 346 B1

FIG. 4

FIG. 5

FIG. 6

FIG. 7

41  42  40

TT

TT
4

b (X)

TA

y

x

z

EP 0 735 346 B1

FIG. 8

TM

51  52  51  52  51  52

TT1

TT2

53  54  55  56

TA  TA/4  3TA/4  TA

Y

X

Z

59

FIG. 9

EP 0 735 346 B1

FIG. 10

FIG. 11

80

81 82

TA

$\frac{TT(Y)}{4}$

TT(Y)

y

x

z

FIG. 12

53 55 54 56

50

TT1

TT2

TT1/4

TT2/4

TA

57

y

z — x

24

EP 0 735 346 B1

FIG. 13

FIG. 14

FIG.15

94

93

90

99

4

y

z

x

95

62

6

63

9

96

8

EP 0 735 346 B1

FIG. 16

194

4

193

152
151
152
159

151

96

9

64

65

74

75

95

Y
Z
X

EP 0 735 346 B1

FIG. 17

EP 0 735 346 B1

FIG. 18

FIG. 19

$-\varphi 2$

$+\varphi 2$

$-\varphi 1$

$+\varphi 1$

159

159

FIG.20

EP 0 735 346 B1